# EUROPEAN PATENT APPLICATION

(11) **EP 4 629 077 A1**
(43) Date of publication of application: **08.10.2025**
(21) Application number: 24168428.1
(22) Date of filing: 04.04.2024
(51) Int. Cl.: G06F 9/50

(54) **DEVICE FOR SELF-ORGANIZED DISTRIBUTED TASK ORCHESTRATION**

(71) Applicant: Fraunhofer-Gesellschaft zur Förderung der angewandten Forschung e.V., 80686 München (DE)
(72) Inventor: SCHRAUTH, Manuel, 91058 Erlangen (DE); THOME, Moritz, 91058 Erlangen (DE); OHLENFORST, Torsten, 91058 Erlangen (DE); BAUER, Maik, 91058 Erlangen (DE); KREYß, Felix, 91058 Erlangen (DE)
(74) Representative: Schlenker, Julian

(57) **Abstract**

Embodiment provide a network node for an edge computing network, wherein the network node is configured to obtain input data to be processed by a computational task, wherein the computational task comprises a plurality of computational steps, wherein the network node is configured to distribute a processing of at least one computational step of the plurality of computational steps over at least one other network node of the edge computing network, in order to distribute the computational task over different nodes of the edge computing network.

## Description

Embodiments of the present application relate to the field of edge computing, and more specifically, to a network node for an edge computing network. Some embodiments relate to a device for self-organized distributed task orchestration.

Edge computing is a distributed computing paradigm that brings computation and data storage closer to the sources of data (i.e. the edge of the network), aiming to reduce latency, conserve bandwidth, and ensure data sovereignty [1, 2, 3]. Unlike cloud computing, which relies on large-scale data centers, edge computing processes data at or near the point where it is generated, for instance in loT devices, sensors, or local edge servers. By enabling local data processing, edge computing enhances data security and privacy, as sensitive information is not resorted to the cloud or other foreign data infrastructure.

Communication networks form the backbone of modern digital infrastructure. Their reliability can be compromised by various factors, which can primarily be grouped into two categories, node volatility and connectivity issues.

First, node volatility is described. In a communication network, the nodes may include servers, routers, switches, computers, smartphones, wearables, loT devices, and other devices. From this point forward, herein it is referred to any of these as network devices, network participants, or simply nodes. Nodes can be unstable or unreliable due to reasons, such as one or more out of:
- Hardware Failures: Physical damage of hardware components can cause a node to become unreliable or fail entirely.
- Software Issues: Bugs, incompatible updates, or malicious software (malware) can disrupt the normal functioning of network devices.
- Power Outages: Interruptions in power supply can render nodes temporarily inoperative.
- Topology Changes: For networks relying on mobile nodes, the network topology - the arrangement of nodes and connections - changes dynamically. This can complicate routing decisions and lead to increased latency or packet loss as the network continuously adjusts to the new layouts.

Second, connectivity issues are described. Connection issues pertain to the problems in the links or pathways that connect the nodes within a network. These issues can arise due to one or more out of:
- Physical Damage: Wires, cables, and other physical mediums can suffer damage from environmental factors, such as construction activities, or accidents, disrupting the connection.
- Signal Interference: For wireless connections, interference from other wireless devices, physical obstructions, or even weather conditions can weaken or disrupt the signal.
- Network Congestion: High traffic volumes can congest network pathways, slowing down data trans- mission or causing timeouts.

Given a highly dynamic network topology, such as a mobile ad-hoc network, where communication is generally unreliable due to node volatility or other connectivity issues, reliable and robust processing of computational tasks cannot be guaranteed. This problem becomes particularly severe if the task contains multiple stages which are required to be handled in a distributed manner.

A known orchestration system is Kubernetes^{®}, an open-source platform designed to automate deploying, scaling, and operating application containers. At its core, it manages containerized applications across a cluster of machines in an efficient and automated manner.

Kubernetes^{®} employs a centralized control plane architecture, comprising several components such as the API server, scheduler and controller manager. This design necessitates a single main controller responsible for coordinating and managing the cluster state and resources. The main controller acts as the brain of the cluster, making decisions about workload placement, scaling, and health monitoring based on desired configurations and policies. Kubernetes^{®} achieves these capabilities through a declarative configuration model, where the desired state of the application is defined in configuration files. The Kubernetes^{®} controller continuously monitors the state of the cluster and adjusts it as needed to match the desired state, automating the scaling process and load distribution. In addition, Kubernetes^{®} service discovery and load balancing features eliminate the need for manual configuration of network traffic routing, as services automatically discover pods based on labels and selectors. This simplifies the deployment and scaling of applications by abstracting the complexity of managing network traffic.

Kubernetes^{®} assumes a relatively stable and predictable network environment where nodes and their network addresses remain constant over time. In such static network environments, Kubernetes^{®} can efficiently manage containerized applications, ensuring their availability, scalability, and resilience without significant disruptions. In environments characterized by rapid changes in network topology and node availability, such as mobile ad-hoc networks, Kubernetes^{®} faces significant challenges. One critical issue is the reliance on a single main controller node for cluster management. In highly dynamic ad-hoc networks, nodes might join or leave the network frequently, including the controller node itself. If the main controller node becomes unavailable due to mobility or network disruptions, the entire Kubernetes^{®} cluster could suffer from a lack of central coordination. This dependency on a single point of control effectively renders Kubernetes^{®} impractical for scenarios where nodes dynamically enter and exit the network, as it cannot adapt to the unpredictable nature of mobile ad-hoc environments. Furthermore, resource management becomes exceedingly difficult when nodes constantly fluctuate in the network, making it challenging for Kubernetes^{®} to allocate and optimize resources efficiently across the cluster.

In summary, Kubernetes^{®} is highly proficient in orchestrating containerized workloads within stable, static network environments, leveraging its centralized control plane architecture. In contrast, the subject of this invention is specifically tailored for highly dynamic mobile ad-hoc network scenarios as it can navigate a constantly changing network topology.

Therefore, there is the need for improvements or enhancements with respect to reliability and robustness of processing a computational task in an edge computing network.

It is noted that the information in the above section is only for enhancing the understanding of the background of the invention and therefore it may contain information that does not form prior art and is already known to a person of ordinary skill in the art.

Embodiments of the present invention are described herein making reference to the appended drawings.
- Fig. 1: shows a schematic representation of an ad-hoc network cluster,
- Fig. 2: is a schematic representation of an edge computing network comprising a plurality of network nodes, according to an embodiment,
- Fig. 3: shows a functional diagram of a message handling framework within a network node,
- Fig. 4a: shows a schematic representation of a definition of input data, a task comprising four computation steps and a result of the task comprising four computation steps,
- Fig. 4b: shows a schematic representation of an edge computing network comprising three network nodes as well as a data flow between the three network nodes for performing the tasks comprising the four computation steps in a distributed manner,
- Fig. 4c: shows a schematic representation of an edge computing network comprising four network nodes as well as a data flow between the four network nodes for performing the tasks comprising the four computation steps in a distributed manner,
- Fig. 5a: shows a schematic representation of an edge computing network comprising six network nodes as well as a data flow between the six network nodes for performing a computational task comprising four steps, where one of the steps comprises three sub-steps that are performed in parallel by the three of the six network nodes,
- Fig. 5b: shows a schematic representation of an edge computing network comprising four network nodes as well as a data flow between the four network nodes for performing a computational task comprising four steps, where one of the steps comprises three sub-steps that are performed in parallel by one of the four network nodes,
- Fig. 6: shows in a sequence diagram the transmission of messages between a first network node and a second network node, thereby enabling the second node to distribute a processing of a work package by a respective computational step to the first network node, where it is exemplarily assumed that one of the messages is lost,
- Fig. 7: shows in a sequence diagram the transmission of messages between a first network node, a second network node and a third network node, enabling the second node to distribute a processing of a work package by a respective computational step to one out of the first network node and the third network nod, where it is exemplarily assumed that one of the messages is lost, resulting in packet duplication,
- Fig. 8: shows in a sequence diagram the transmission of messages between five network nodes in order to allow for a distribution of a processing of a work package from a first node to the other network nodes for processing the work package by respective computational steps,
- Fig. 9: shows in a sequence diagram the transmission of messages between five network nodes, enabling a third network node to distribute a processing of its work packages by respective computational steps to the other network nodes,
- Fig. 10: shows a data flow diagram for a workflow comprising three tasks,
- Fig. 11: a schematic representation of a high-level system architecture example of a network node, and
- Fig. 12: illustrates an example of a computer system on which units or modules as well as the steps of the methods described in accordance with the inventive approach may execute.

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to one skilled in the art that embodiments of the present invention may be practiced without these specific details. In other instances, well-known structures and devices are shown in block diagram form rather than in detail in order to avoid obscuring embodiments of the present invention. In addition, features of the different embodiments described hereinafter may be combined with each other, unless specifically noted otherwise.

The network node described herein can be paired with a generic network. The generic network may provide one or more out of the following functionality:
- Constitute and maintain an ad-hoc network from an ensemble of devices.
- Provide peer-to-peer sending and receiving capabilities.
- Perform message routing.

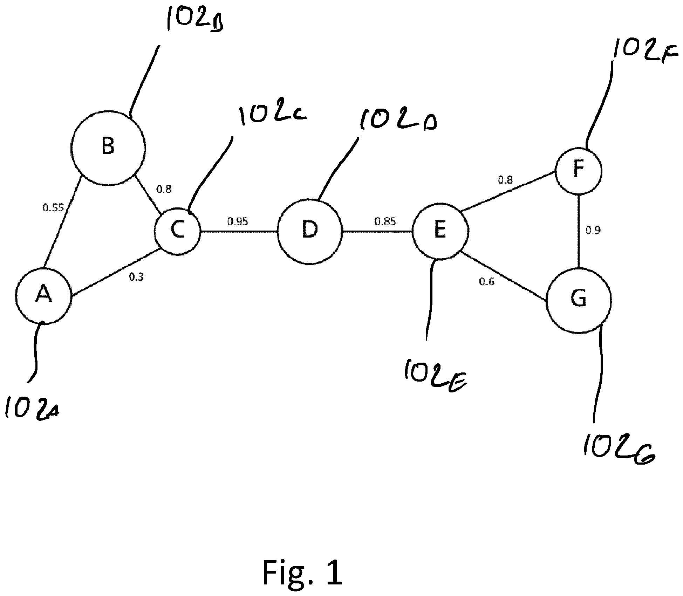

For example, [8] describes such an ad-hoc network for a collection of low-energy Bluetooth edge devices. However, it is noted that the present invention is not limited to such embodiments, rather it is just one of many potential realizations, and the specific implementation of the network backend is quite generic. It is not limited to Bluetooth or mobile networks [9, 10], although mobile networks are the main application for what follows in this manuscript. Besides providing an API for send/receive functionality, the backend operates fully independent from the framework presented here. It can, but is not required to, include fault-tolerance features to prevent message loss. Even though embodiments may implement fault tolerance mechanisms on their own, additional fault-tolerance in the backend can be beneficial to additionally stabilize connections, where messages are routed through multiple nodes, such as illustrated in Fig. 1.

Fig. 1 shows a schematic representation of an ad-hoc network cluster. As shown in Fig. 1, heterogeneous nodes of two bipartite groups (nodes 102_{A}, 102_{B}, 102c and nodes 102_{E}, 102_{F}, 102_{G}) are not directly interconnected, but via a "gateway", i.e. node 102_{D}. The network backend handles the message routing through multiple nodes. Annotated numbers indicate connection weights and node size relates to the available computational performance.

In embodiments, a scenario is considered in which input data is processed locally within an established network of edge devices. The data source can be manifold, such as, for example, sensors connected to or mounted on network devices, user queries or other external data streams. The input data is to be processed by a computational algorithm that is broken down into distinct, sequential steps. These steps are allocated across various edge devices within a network. Distributing a computational task rather than performing it on one single device can be demanded for a number of reasons, such as:
- Specialized Hardware: Distributed systems enable the use of nodes tailored to specific tasks (e.g., GPUs or special-purpose accelerators for machine learning tasks), which can perform certain computations more efficiently than a general-purpose single-node system.
- Scalability: Distributed networks offer unparalleled flexibility in terms of scaling. It is typically easier and more cost-effective to add or remove nodes in a distributed system than to upgrade the hardware of a single-node system to meet increasing demands.
- Technical Limitations: The complete computational algorithm, particularly when it involves numerous parameters, may surpass the capabilities of a single device or necessitate frequent context switches, negatively affecting energy efficiency and performance [4, 5].
- Pipelining: A sequential, distributed multi-step approach can enhance performance indicators, such as data throughput. It allows to streamline processing stages and thus enables a continuous data flow.

A prime use case that incorporates all the aforementioned points is modern machine learning applications. Typically, both deep neural network architectures (such as for image recognition, feature detection, signal processing, and natural language processing), but also classical machine learning approaches, such as high-dimensional support vector machines [6] or ensemble methods such as gradient boosting machines [7] comprise a vast number of computational parameters. Once trained, inference element dimensions are usually small (e.g., low-resolution images, sensor data snippets, time series, or sequences of word tokens), especially compared to the number of parameters in the machine learning task. By distributing the computation across multiple edge devices, issues regarding hardware limitations can be alleviated by partitioning the task in a way that fits within each device's capabilities, possibly utilizing specialized hardware, if available. Moreover, given that inference inputs, while individually small, are often numerous, efficient pipelining and scalability can be accomplished.

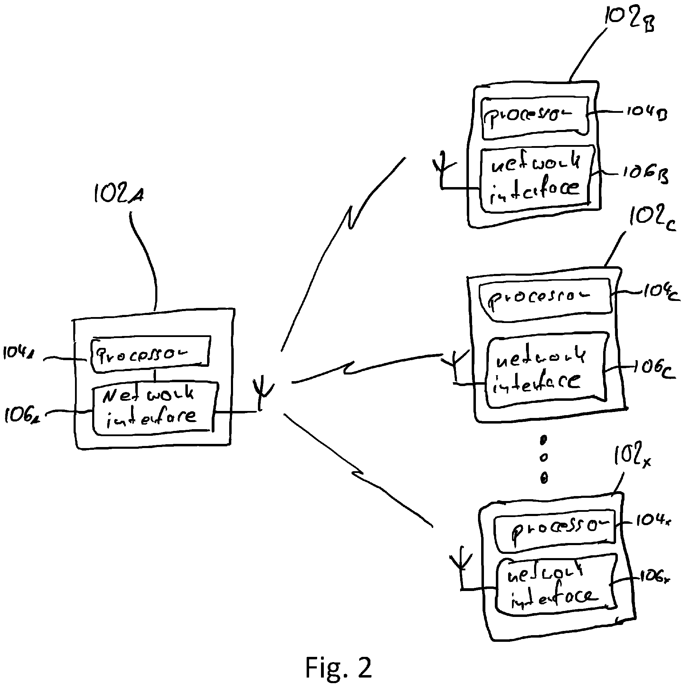

Embodiments of the present invention may be implemented in an edge computing network as depicted in Fig. 2. Specifically, Fig. 2 is a schematic representation of an edge computing network comprising a plurality of network nodes 102_{A}, 102_{B}, ..., 102ₓ. In general, the edge computing network 100 can comprise up to x network nodes, wherein x is a natural number greater than or equal to two, x ≥ 2, such as, for example, 2, 3, 4, 5, 10, 20, 30, 50, 100 or even more network nodes. The network nodes 102_{A}, 102_{B}, ..., 102ₓ might communicate directly with each other via a network (e.g., backend). The network nodes 102_{A}, 102_{B}, ..., 102ₓ might include a processor 104_{A} to 104ₓ and a network interface 106_{A} to 106ₓ. Although in Fig. 2 the network is exemplified by means of a wireless network, it could also be a wired network or a combination of a wireless and a wired network.

Embodiments provide a network node [e.g., edge device or orchestration device] for a [e.g., volatile] edge computing network [e.g., comprising a plurality of network nodes], wherein the network node is configured to obtain input data (INP) to be processed by a computational task [e.g., by the edge computing network], wherein the computational task comprises a plurality of [e.g., sequential] computational steps (s₁, s₂, ..., sₙ), wherein the network node is configured to distribute a processing [e.g., or execution] of at least one computational step [e.g., at least two computational step (s₁, s₂)] of the plurality of computational steps (s₁, s₂, ..., sₙ) over at least one other network node [e.g., at least two other network nodes] of the edge computing network, in order to distribute the computational task over different nodes of the edge computing network [e.g., wherein the different nodes are the at least one other network node [e.g., or at least two other network nodes] and optionally the network node].

In embodiments, the input data is to be processed by the computational task by sequentially applying the plurality of computational steps to the input data or [e.g., respective] processed versions of the input data.

For example, a first computational step of the plurality of computational steps can be applied to the input data, wherein a second computational step and each following computational step of the plurality of computational steps can be applied to a processed version of the input data [e.g., an immediately preceding computational result of the input data] obtained by an immediately preceding computational step, e.g., the second computational step can be applied to a first processed version of the input data, which is a result of the first computational, step, where the third computational step can be applied to a second processed version of the input data, which is a result of the second computational step, and so on.

In embodiments, the network node is configured to distribute the processing of the at least one computational step to the at least one other network node by transmitting a data package [e.g., work package] to a respective network node of the at least one network node, the data package comprising the input data or a processed version of the input data to be processed by a respective computational step of the at least one computational step by the respective other network node.

For example, the first data package can comprise the input data to be processed by the first computational step, where the second data package can comprise a first processed version of the input data, which is a result of the first processing step and which is to be processed by the second computational step.

In embodiments, the processing of the at least one computational step (s₁) is distributed over the at least one other network node by means of a request-response [e.g., broadcast-response] mechanism [e.g., procedure].

In embodiments, the network node is configured to perform the request-response mechanism by, for [e.g., each of] the at least two computational steps (s₁, s₂)],
- transmitting [e.g., broadcasting] a request message to the at least one other network node, the request message requesting an availability to perform a respective step of the at least one computational steps (s₁),
- transmitting, in response to a reception of an accept message from one of the at least one other network nodes, the accept message indicating an availability for performing the respective step of the at least one computational steps (s₁), a compute message to the respective other network node, the compute message triggering the respective other network node to perform the respective computational step.

For example, the network node can be configured to transmit a first request message to the at least one other network node, the first request message requesting an availability to perform a first computational step (s₁) of the at least one computational step (s₁), and to transmit, in response to a reception of a first accept message from a first other network node of the at least one other network node, the first accept message indicating that the first other network node is available for performing the first computational step (s₁), a first compute message to the first other network node, the first compute message triggering the first other network node to perform the first computational step.

For example, the at least one other network node can be at least two other network nodes, wherein the at least one computational step can be at least two computational steps (s₁,s₂), wherein the network node can be configured to transmit a second request message to the at least two other network node, the second request message requesting an availability to perform a second computational step (s₂) of the at least two computational step (s₁, s₂), and to transmit, in response to a reception of a second accept message from a second other network node of the at least two other network nodes, the second accept message indicating that the second other network node is available for performing the second computational step (s₂), a second compute message to the second other network node, the second compute message triggering the second other network node to perform the first computational step.

In embodiments, the compute message further comprises or is transmitted together with a respective data package (p₀, p₁, p₂, ..., pₘ) to be processed by the respective computational step.

For example, the first compute message can comprise or be transmitted together or successively with the first data package p₁, where the second compute message can comprise or be transmitted together or successively with the second data package p₂. Note that data packets may change as they propagate through the network. The labels p₀, p₁, p₂, etc. are just names of the respective data packets [e.g., work packages] indicating that the internal data payload is processed further by each step, e.g., p₀ designates a data packet comprising the input data, p₁ designates a data packet comprising a processed version of the input data processed by the first computationsl step s₁, p₂ designates a data packet comprising a further processed version of the input data processed by the second computationsl step s₂, etc.

Note that it is also possible the network node might obtain more than one input data, such as a first input data (e.g., a first image or a first sensor reading) and a second input data (e.g., a second image or a second sensor data). The different input data may be associated with a different index a, b, c, ... , i.e. first input data can be called input data INPₐ and second input data can be called input data INP_{b} in the aforementioned example. Thereby, for processing the input data INPₐ by means of the plurality of steps s₁, s₂ s₃, a work package pₐ can be used that carries the input data INPₐ a or a processed version thereof to the respective network nodes that carry out the respective steps, where for processing the input data INP_{b} by means of the plurality of steps s₁, s₂ s₃, a work package p_{b} can be used that carries the input data INP_{b} or a processed version thereof to the respective network nodes that carry out the respective steps. Thereby, an index tuple can be used for identifying the work packages and the state of the data contained the work packages. For example, p_{a,0} can identify work package pₐ carrying the input data INPₐ to be processed by the first computational step s₁, where p_{a,1} can identify work package pₐ carrying a processed version of the input data INPₐ processed by the first computational step s₁, where p_{a,2} can identify work package pₐ carrying a further processed version of the input data INPₐ processed by the second computational step s₂. Similarly, p_{b,0} can identify work package p_{b} carrying the input data INP_{b} to be processed by the first computational step s₁, where p_{b,1} can identify work package p_{b} carrying a processed version of the input data INP_{b} processed by the first computational step s₁, where p_{b,2} can identify work package p_{b} carrying a further processed version of the input data INP_{b} processed by the second computational step s₂.

In embodiments, the network node is configured to transmit the respective compute message immediately in response to the reception of the respective acknowledge message.

In embodiments, the network node is configured, in case of receiving two or more accept messages from two or more other network nodes [e.g., within an acceptance window] in response to a respective request message, to select one of the two or more other nodes based on a selection criterion and to transmit the respective compute message to the selected other network node.

For example, the network node can be configured, in case of receiving two first accept messages from the first other network node and a third other network node in response to the first request message, to select one other network node out of the first other network node and the third other network node in dependence on a selection criterion and to transmit the first compute message to the selected node out of the first other network node and the third other network.

For example, the network node can be configured, in case of receiving two second accept messages from the second other network node and a fourth other network node in response to the second request message, to select one other network node out of the second other network node and the fourth other network node in dependence on a selection criterion and to transmit the second compute message to the selected node out of the second other network node and the fourth other network.

For example, the selection criterion can be one out of
- an order of the received two or more accept messages,
- a connection quality to the two or more other network nodes,
- a connectivity level to the two or more other network nodes,
- a battery level of the two or more other network nodes.

In embodiments, the network node is configured to periodically transmit request messages in case there are data packages in its outgoing queue, wherein the data packages comprise the input data [e.g., sensor data, such as a camera image] or a processed version of the input data to be processed by a respective computational step of the at least one computational step by the respective other network node.

In embodiments, the network node is configured to retransmit a respective request message in case that no respective accept message is received [e.g., within a predetermined time spawn].

In embodiments, the network node is configured to retransmit a respective request message in case that no acknowledgement message is received, the acknowledgment message indicating that the respective compute message and/or the respective data package was successfully received.

For example, the network node can be configured to retransmit the first request message in case that the first accept message is not received [e.g., within a predetermined time spawn], wherein the network node can be configured to retransmit the second request message in case that the second accept message is not received [e.g., within a predetermined time spawn].

For example, the network node can be configured to retransmit the first request message in case that no first acknowledgement message is received, the first acknowledgment message indicating that the first compute message and/or the first data package was successfully received, wherein the network node can be configured to retransmit the second request message in case that no second acknowledgement message is received, the second acknowledgment message indicating that the second compute message and/or the second data package was successfully received.

In embodiments, the network node is configured, upon connecting to the edge computing network, to immedialty respond to a request message requesting an availability to perform a respective step of the at least one computational steps (s₁) in case that the network node is capable of performing the respective step.

In embodiments, the network node is configured, upon connecting to the edge computing network, to load instructions [e.g., to a volatile memory (e.g., RAM) [e.g., from a non-volatile memory (e.g., hard drive)] for performing at least one of the plurality of computational steps (s₁, s₂, ..., sₙ).

In embodiments, the network node is configured, upon detecting that no other network node of the edge computing network is currently capable of performing one of the plurality of computational steps (s₁, s₂, ..., sₙ), to load instructions for performing the one computational step.

In embodiments, the network node is a battery operated device, such as user equipment, loT device, autonomous robot or drone or unmanned vehicle.

In embodiments, the network node is connected to the at least two other network nodes of the edge computing network via a network backend.

In embodiments, at least one of the plurality of steps comprises a plurality of sub-steps, wherein the plurality of sub-steps are performed in parallel by the network node and/or at least one other network node.

In embodiments, the input data (INP) is to be processed by a at least two computational tasks, each of the at least two computational tasks comprising a plurality of computational steps.

Further embodiments provide an edge computing network, wherein the edge computing network comprises a plurality of network nodes according to one of the embodiments described herein.

In embodiments, the edge computing network comprises no central, managing/orchestrating server or group head.

In embodiments, edge computing network is a neural network.

Further embodiments provide a method for distributing a computational task over different nodes of an edge computing network. The method comprises a step of obtaining input data to be processed by the computational task, wherein the computational task comprises a plurality of computational steps (s₁, s₂, ..., sₙ). Further, the method comprises a step of distributing a processing of at least one computational step (s₁) of the plurality of computational steps (s₁, s₂, ..., sₙ) over at least one other network nodes of the edge computing network, in order to distribute the computational task over different nodes of the edge computing network.

In traditional distributed computing systems, it is relied on largely homogeneous hardware, e.g., many similar blade servers in a supercomputer or an array of GPUs. In contrast to that, in accordance with embodiments, the network nodes are not only allowed to be explicitly heterogeneous, but rather the computing network can make the heterogeneity usable. For example, assuming that an ensemble of network nodes comprises a comparatively powerful network node and otherwise weaker, smaller network nodes a particularly complex "step" can be assigned to the comparatively powerful network node.

In accordance with embodiments the edge computing network is adaptable at run time. Specifically, newly added network nodes can be seamlessly integrated into the task orchestration and/or task/step assignments can be dynamically adapted. For instance, assuming that a computational task comprises three steps and one of these three steps, such as the third step, is only loaded in one of the network nodes and specifically this network nodes fails (e.g., leaves the system, is turned off, etc.), another network node, e.g., based on a heuristic, detects that the respective step isn't available any more in the system and loads the respective step in response to the detection, such that this node can take over the respective step. Thus, in embodiments, no external intervention is required for solving that issue / bottleneck.

Embodiments provide a network device that is capable of orchestrating distributed multi-stage computational tasks in heterogeneous communication networks in a self-organized, local and de-centralized manner. It ensures robust and reliable data processing in unreliable environments.

In embodiments, the network orchestration device, also referred herein as to network node or network device, is designed for use within a network comprising a plurality of network devices (e.g., hierarchically identical units). The collective ensemble of multiple devices connected through a network backend ensures that even if one or more nodes fail or leave (volatile network), the system as a whole can continue to operate, rerouting tasks as needed. Conversely, the system is designed to automatically adjust when new nodes join, seamlessly integrating them into the task orchestration procedure. For brevity, in the following description, the term orchestration device (OD) is used to describe one single unit and the term orchestrating network cluster (ONC) is used to describe an ensemble of such devices, connected via a network backend, as discussed above.

In an ONC, each node represents an entirely independent OD. In embodiments, all units are equivalent, with no distinction in their functional capabilities. In particular, there is no distinction among nodes in an ONC in terms of their high-level operational scope. Device are not statically assigned as, for instance, input nodes, worker nodes or gateway nodes. Any node can dynamically assume any role (or even multiple roles) within the network at runtime and might hence function as an input point, processing unit, conduit for routing information, or a cloud/satellite gateway simultaneously. Consequently, a task orchestration system composed of orchestration nodes does not require a central unit, such as a cluster head or master server.

In embodiments, the component that allows the ONC to orchestrate tasks in a self-organized fashion, is its event-driven architecture, where any operation is initiated in response to incoming trigger messages. Decisions are made locally, i.e. on-device. It is presumed that a generic network backend is implemented on each node, which establishes and maintains the cluster structure. The specifics of its implementation are not important, as long as it provides server functionalities, particularly the ability to actively listen for incoming messages, as well as the ability to initiate outbound communication to other devices in the ONC.

In embodiments, a standardized message format is used, where orchestration messages are complemented with meta information, which enables the local de-centralized decision process. This means that packages know, for instance, the currently required step of the calculation sequence and the designated final target of the computation result.

In embodiments, the task orchestration is initiated through a broadcast-response mechanism. Whenever a network participant discovers a work package in their local queue which awaits processing, it initiates periodic broadcast requests, which contain the required step of the computation for this particular work package. Requests are sent to all participants known in the ONC, with the network backend taking over client-server connections and routing. It is irrelevant, whether a work package in the queue comes from a dedicated data entry point (e.g. a sensor) or is the result of an earlier computation step.

In embodiments, when another orchestration node receives the request, an accept message is returned in case the required computation step is locally available and the node is not currently busy performing another computation. As soon as the accept message reaches the original node, the actual data payload is sent to the origin of the accept. If multiple accepts are received, multiple (different) packages are sent based on the order in which their response messages were received. This avoids unnecessary delays and allows straightforward implementation of redundancies in terms of the distribution of task steps within the network, as will be discussed in detail later.

In embodiments, upon receipt of the data, the recipient node immediately begins its part of the calculation, which stops as soon as the next required step is found to be not loaded on this device. The package is moved to a local sending queue and the node sends out a broadcast request to find a network participant that is capable of handling the intermediate result and performing the subsequently required computation step. This scheme is continued until all steps have been successfully processed. Eventually, the result of the work package is sent to the final target.

### 1. Node uniformity

In embodiments, the concept of functionally identical devices in an orchestrating network cluster (ONC) constitutes a notable deviation from traditional network architectures, which often rely on hierarchical structures with designated cluster heads or central server units (cf. state of the art above). In contrast, an ensemble of ODs is meant to establish a fully decentralized system, where each node operates on an identical software implementation, regardless of its hardware capabilities or intended role. This approach ensures operational consistency across the network, even or especially when nodes are technically heterogeneous.

In traditional networks, specific roles and responsibilities are typically assigned to particular nodes, possibly creating bottlenecks and single points of failure. In embodiments, these issues are sidestepped by allowing any node to assume any role based on current demands. Roles can vary widely, encompassing input or sensor nodes, processing units, and even communication gateways for external connections, such as cloud uplinks. This versatility is especially beneficial in dynamic ad-hoc networks where the network topology can change rapidly and unpredictably. The ONC automatically adapts to these changes through a mechanism where any action is triggered in response to incoming messages. This design principle facilitates automatic and seamless integration of new nodes and minimizes data loss due to spontaneous node dropouts to a negligible level. For handling complex tasks, we require that tasks are pre-divided into sequential logical blocks. To a certain extend also parallel steps can be handled (cf. section 5.7), even though the primary focus is on sequential data flow. Tasks can be activated or deactivated by trigger messages at runtime. Activation means loading the step instructions into a faster memory unit.

### 2. Task definition

In embodiments, a task can be defined as a (possibly large and expensive) computational algorithm or set of instructions, which operates on given input data and is decomposed into a series of discrete steps. Each step can be implemented as a separate function and is accompanied by suitable decoding and encoding instructions. Decoding prepares incoming data payload for processing and, conversely, encoding standardizes the output of that step, ensuring a uniform message format across all steps of a given task as well as across all tasks hosted on a device. Encoding and decoding do not need to be executed in between two subsequent steps when both are active on the same device, therefore reducing unnecessary performance overhead in this inner loop level. The exemplary pseudo code below shows how a reduction of the performance overhead can be accomplished using a dynamic function execution pattern, which provides the ability to execute steps dynamically based on runtime information.

Specifically, the pseudo code uses a dynamic step execution pattern, where according to the simplified pseudo code, task steps are executed based on the steplD parameter:
1: ▷ set device busy, deactivates message handling
2: busy ← true
3: ▷ extract next required step
4: steplD ← extract_step_id (incoming_message)
5: ▷ task object implements steps, encoding/decoding and executor interface
6: data ← task.decode_step (stepID, incoming_message)
7: ▷ main loop
8: while is_activated (stepID) do
9: data ← task.execute_step (stepID, data)
10: stepID ← stepID + 1
11: end while
12: encoded_result ← task.encode_step (stepID, data)
13: if steplD = task.number_of_steps then
14: ▷ task finished, send result to designated target
15: else
16: ▷ place data in outgoing queue
17: ▷ send broadcast request
18: end if
19: ▷ set device free, re-activate message handling
20: busy ← false

To manage the sequencing and execution of steps within a task, a step register is employed. This register assigns a unique index to each step, creating a countable mapping where the key represents the index and the value is a reference to the step's instructions. Similarly, a task map is maintained on each node to navigate all tasks available. Adding a new task requires a manual deployment step. Hence orchestration nodes are not designed for frequently changing tasks. Step and task management is performed through administrative messages. Activating the step of a task means to load the associated instructions into a faster memory unit.

### 3. Messages

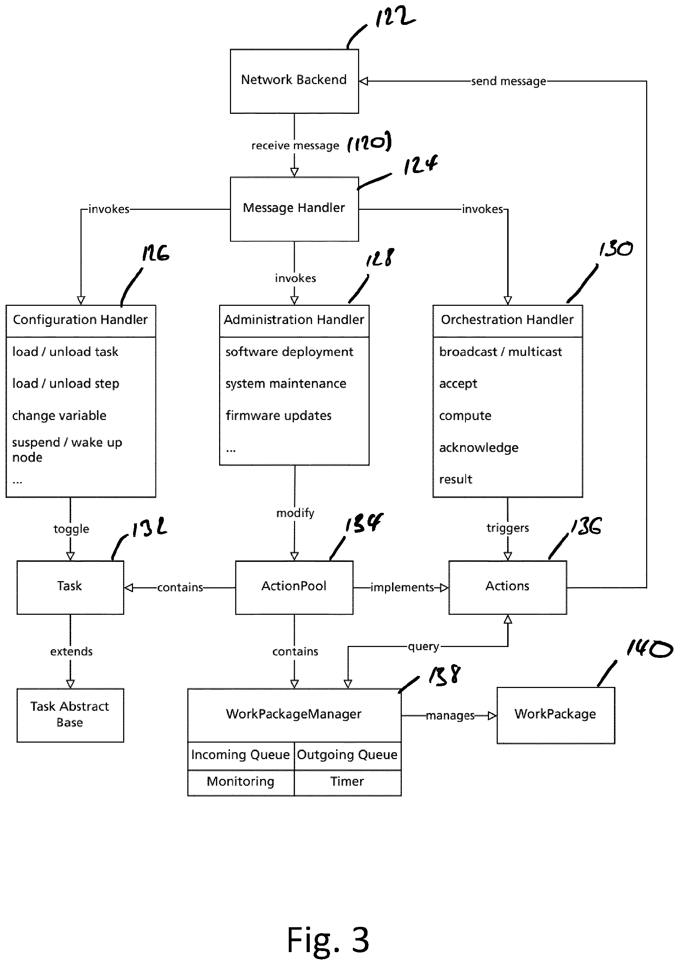

As an ONC operates without a central unit and any action can be triggered by incoming messages, the devices may provide a listening state and handle incoming messages appropriately, as shown by way of example in Fig. 3, which shows a functional diagram of the framework.

Specifically, Fig. 3 shows a functional diagram of a message handling framework within a network node. Incoming messages 120 (e.g., from the network backend 122) trigger the main message handler 124 and are distinguished according to their type. The corresponding specialized message handler unit is invoked, i.e. the configuration handler 126 for configuration messages, the administration handler 128 for administration messages, and the orchestration handler 130 for orchestration messages. Configuration messages act directly on task assignments 132, whereas administrative messages are able to modify the so-called ActionPool 134, where all actions 136, which are functional elements that are triggered by orchestration messages, are managed. Those actions 136 interact with the work package manager 138 and associated queues, i.e. they can, for instance, place, look up or withdraw work packages 140.

More precisely, message arrive at the MessageHandler 124, which, based on contained meta information, distinguishes between three different categories of messages:
- Administrative messages enable deployment of software or firmware updates, as well as new tasks, and facilitate general system maintenance activities, including log retrieval and modification of static settings.
- Orchestration messages orchestrate and manage the work- and data flow within the network. This category includes payload messages, which carry batches of data for processing.
- Configuration messages are essential for managing task assignments or adjusting task-related parameters, such as waiting times and other orchestration variables.

In embodiments, orchestration messages carry adequate metadata to guarantee a self-consistent state throughout the entire multi-step computation process. In other words, all necessary information for local decision-making with respect to the next steps in the trajectory of the package is embedded within the message itself. If identified as an orchestration message, one or more out of the following additional data fields are processed in the associated OrchestrationHandler 130:
- stepID, indicating the next required step; incremented in compute events;
- package identifier, unique identifier of the work package; static;
- target, nodelD of final target node or group of target node; static;
- payload, the data to be processed, typically in encoded format; replaced by new intermediate results after every compute event;
- taskID, only required for distinction if multiple tasks are loaded; static;

Note that not all of these fields are required for every message type. The following Table 1 shows by way of example which data fields might be included in the respective messages:

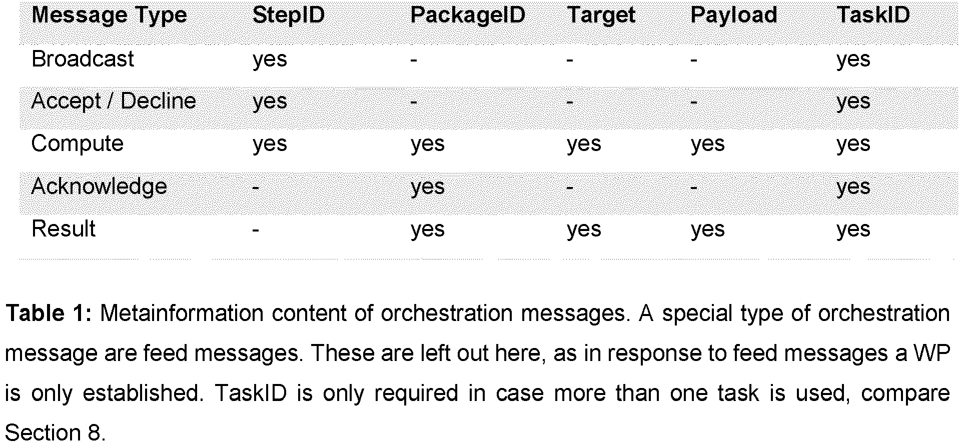

### 4. Work packages

In embodiments, a work package (WP) can be defined as a singular data entity or unit designated for processing. This can be, i.e., an image captured from a camera, a batch of data streamed from a sensor, or a user-generated query. The actual data payload within a WP is formatted according to a standardized specification, for instance, using 8-bit integers, to ensure consistency and interoperability across all devices in the network.

The process of encoding and decoding data to and from this standardized format is handled through specific functions implemented within a task (cf. section 2 and the pseudo code of section 2). This mechanism ensures that data can be efficiently processed as required by the computational steps defined in the task.

In embodiments, each work package can be assigned a unique identifier. In order to prevent the occurrence of duplicate package IDs without relying on a central network unit for ID assignment and orchestration, this identifier can, for instance, be locally generated as a hash from the data payload, whenever a feeding trigger establishes the work package.

In embodiments, each work package can be annotated with the steplD of the next required computation step, as well as the eventual target of the computation, as already detailed earlier. These fields guide the processing and routing of the work package through the network, ensuring that it reaches the appropriate nodes for processing and ultimately arrives at its designated target.

For example, in embodiments the network node might obtain more than one input data, such as a first input data (e.g., a first image or a first sensor reading) and a second input data (e.g., a second image or a second sensor data). The different input data may be associated with a different index a, b, c, ... , i.e. first input data can be called input data INPₐ and second input data can be called input data INP_{b} in the aforementioned example. Thereby, for processing the input data INPₐ by means of the plurality of steps s₁, s₂ s₃, a work package pₐ can be used that carries the input data INPₐ a or a processed version thereof to the respective network nodes that carry out the respective steps, where for processing the input data INP_{b} by means of the plurality of steps s₁, s₂ s₃, a work package p_{b} can be used that carries the input data INP_{b} or a processed version thereof to the respective network nodes that carry out the respective steps. Thereby, an index tuple can be used for identifying the work packages and the state of the data contained the work packages. For example, p_{a,0} can identify work package pₐ carrying the input data INPₐ to be processed by the first computational step s₁, where p_{a,1} can identify work package pₐ carrying a processed version of the input data INPₐ processed by the first computational step s₁, where p_{a,2} can identify work package pₐ carrying a further processed version of the input data INPₐ processed by the second computational step s₂. Similarly, p_{b,0} can identify work package p_{b} carrying the input data INP_{b} to be processed by the first computational step s₁, where p_{b,1} can identify work package p_{b} carrying a processed version of the input data INP_{b} processed by the first computational step s₁, where p_{b,2} can identify work package p_{b} carrying a further processed version of the input data INP_{b} processed by the second computational step s₂.

### 5. Data flow

In an ONC, tasks can be implemented as ordered sequences of steps. Individual steps may contain parallel branches as detailed in section 5.7.

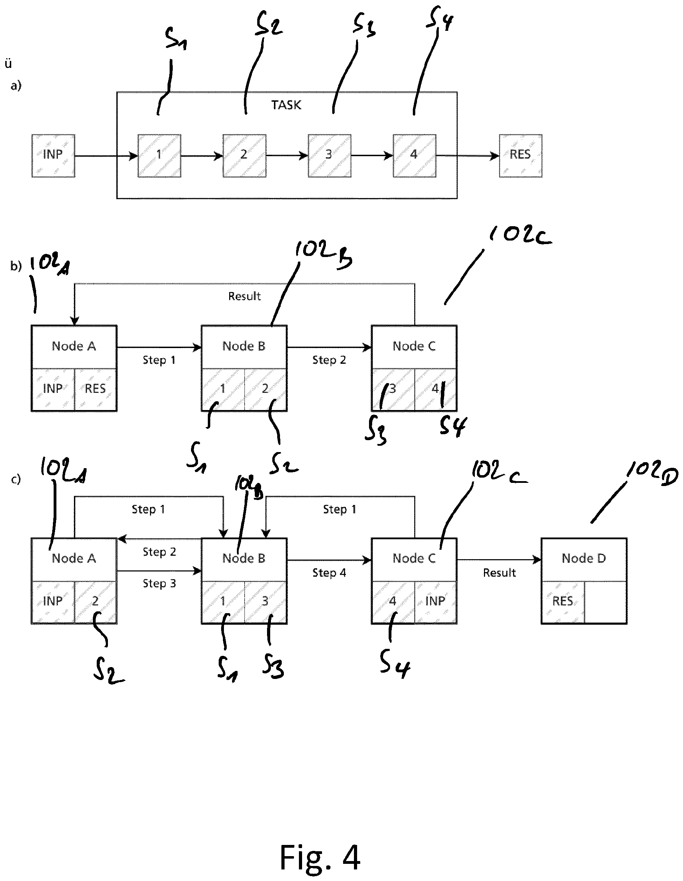

For example, a deep feed-forward neural network with 16 layers can be divided into bundles of 4 layers each. Hence, there are four sub-steps of the overall calculation and at least three additional data transmissions (i.e. compute messages including data payload) are necessary, as shown in Fig. 4a-4c, which show schematic representations of data flow examples in distributed four-step tasks.

In detail, Fig. 4a shows a schematic representation of a definition of input data INP, a task comprising four computation steps s₁, s₂, s₃ and s₄ and a result RES of the task comprising four computation steps s₁, s₂, s₃ and s₄.

Fig. 4b shows a schematic representation of an edge computing network comprising three network nodes 102_{A}, 102_{B} and 102c as well as a data flow between the three network nodes 102_{A}, 102_{B} and 102_{C} for performing the task comprising the four computation steps s₁, s₂, s₃ and s₄ in a distributed manner, where a first node 102_{A} receives the input data, a second node 102_{B} performs steps s₁ and s₂, where a third node 102_{C} perform s₃ and s₄, and where the first node 102_{A} receives the result RES. In other words, Fig. 4b shows a schematic representation of a simple pipelining in a cluster of three nodes 102_{A}, 102_{B} and 102c.

Fig. 4c shows a schematic representation of an edge computing network comprising four network nodes 102_{A}, 102_{B}, 102_{C} and 102_{D} as well as a data flow between the four network nodes 102_{A}, 102_{B}, 102_{C} and 102_{D} for performing the task comprising the four computational steps s₁, s₂, s₃ and s₄ in a distributed manner, where the first node 102_{A} receives the input data, then first the second node 102_{B} performs the first step s₁, second the first node 102_{A} performs the second step s₂, third the second node 102_{B} performs the third step s₃, fourth the third node 102_{C} performs the fourth step s₄ and finally the fourth node 102_{D} obtains the result RES. Alternatively, and as also indicated in Fig. 4c, the third node 102_{C} might obtain the input data INP, where first the second node 102_{B} performs the first step s₁, second the first node 102_{A} performs the second step s₂, third the second node 102_{B} performs the third step s₃, fourth the third node 102_{C} performs the fourth step s₄ and finally the fourth node 102_{D} obtains the result RES. In other words, Fig. 4c shows a schematic representation of a more complex data flow comprising multiple input nodes 102_{A}, 102_{B}, 102c and 102_{D}.

In Figs. 4a-4c, hatched boxed with numbers 1, 2, 3 and 4 denote the four parts of the distributed neural network, presented in Fig. 4a. INP and RES indicate the input data and the result of the calculation. Arrows indicate data transmissions and are labelled according to the next calculation step following the transmission. In Fig. 4b, a simple scenario with three nodes is shown, where Node A has available neither of the computation steps but only manages input and output data. Nodes B and C handle the actual calculations. In Fig. 4c, even though A and D are both input nodes, neither device has the initial calculation step loaded, thus requiring for additional transmissions. The example illustrates that an ONC can operate on any given distribution of steps on available devices. The broadcast-response mechanism automatically finds a way "through the network", allowing the four steps (in case of this example) to be executed in the correct order and the result to be ultimately sent to the designated target.

### 5.1 Entry points

Given that there is functionally no difference between receiving a data packet from another node as result of a previous computation or directly from a sensor or input device attached to the node, it becomes apparent that any node can be externally supplied with data at any time. External input data is encapsulated into a work package, placed in the outgoing queue and issued for transmission via the broadcast-response mechanism.

For practical purposes, feeding input data into the system should be formalized using messages with specific type and implementation of associated handling routines in the ActionPool (cf. Fig. 3).

### 5.2 Broadcast-Response-Mechanism

In embodiments, the broadcast-response mechanism is facilitated by the presence of a work package manager on each node. This manager is responsible for managing and monitoring work packages and provides queueing functionality for the sending process. Work packages can be assigned different states, such as, for example:
- Unassigned: Work packages in this state are passive and wait for further actions.
- Assigned: Work packages in the assigned state have already been sent out to another processing node but are still listed for monitoring purposes, as will be discussed in section 6.
- Done: This state is used when the current node is freed from monitoring responsibilities for a particular work package. Done packages may be kept for a while to avoid duplicates (if the same data comes in again, it will be discarded), but they are eventually deleted.

In embodiments, each node can check (e.g., periodically) its queue for unassigned work packages. This can occur when, since the last check, direct feeding events have provided new data packages (compare section 5.1) or when intermediate computation result have arrived from another node in the meantime. Incoming message are always tagged as unassigned.

In embodiments, if an unassigned work package is found in the local queue, the node sends a broadcast message to all nodes in the network, in request for a participant capable of executing the demanded step. This message contains the required taskID and the required next stepID for that task. In cases where only one task is deployed on the devices in the cluster, the taskID can be omitted. In addition to these periodic broadcasts, incoming data can trigger an immediate, non-regular broadcast, thus improving the pipelining aspect by reducing unnecessary waiting times. To prevent network message pollution, a counter might be used to ensure that there is always a minimal defined time span between consecutive broadcasts, irrespective of whether they are periodic or on-demand.

### 5.3 Polyqueue and Multicasts

In embodiments, in situations where multiple non-consecutive steps of the same task or steps of different tasks are loaded on one OD, the device still maintains a single outgoing queue. This queue can contain entirely different heterogeneous elements, each requesting different next steps. This concept of a polyqueue is significant as it allows to implement multicast requests. Multicast requests generalize standard broadcast requests by enabling the request for multiple (task, step) combinations simultaneously in one message. When using multicasts, the device does not only consider the top-most unassigned work package in its queue but takes into account all the currently unassigned work packages. As broadcasts are sent to all participants, this approach can significantly reduce the number of messages in complex networks.

### 5.4 Acceptance Handling

In embodiments, when nodes receive a broadcast or multicast message, they will immediately send back an accept message if the required step is currently loaded. However, if a node is already busy with a computation, the message handler is switched off and no response will be transmitted. One might consider sending a dedicated decline message in this case, but this is optional.

The node that originally sent the request will now receive the accept messages and there are a number of options for how these can be handled.

A first option is first-come-first serve. In this approach, when an accept message is received, a work package is immediately sent to where the accept message came from. This means that accept messages are not tied to a specific broadcast request and are handled independently. Hence, one single broadcast request can result in sending out multiple work packages (in a situation where it has triggered more than one accepts). These packages are sent out in the order the accepts have been received, without any prioritization based on external factors, thus rendering this approach highly performant. If there are more accept messages for a particular stepID than there are packages available, it is clear that some accepts will not get a package in return.

A second option is an acceptance window. This approach involves a specific time frame reserved for waiting after a broadcast request. During this acceptance window, incoming accept messages are collected. Available packages are then handed out to the fittest or most suitable nodes, determined by a local user-implemented optimization algorithm, that might take into account various external factors, such as, e.g., connection quality, connectivity level, battery level, and other hardware specifications. Therefore, this approach requires knowledge of the status and hardware of other nodes within the network, which can, e.g. be provided by the network backend.

A third option is preferencing. In situations where detailed knowledge about the states and specifications of other devices is not available, nodes can create dynamically evolving local preference lists. For instance, a node might keep track of the last few destinations it sent data packages to, as a function of the stepID. This allows to pinpoint other nodes that are particularly reliable and likely to work in synchronization, enhancing the efficiency of the pipelining aspect. This simple example (i.e. selecting targets form a short history) illustrates the concept, and in practice, the local preference system might be implemented in a more advanced manner.

### 5.5 Flow Control and Load Balancing

In a cluster of ODs, the orchestration logic is designed to incorporate flow control and load distribution automatically. Given the step-by-step propagation of work packages and local routing decisions based on recent responses from other nodes, this can be achieved by allowing nodes to actively suspend their participation in further requests, e.g. when they are already engaged in computation. This way, the system achieves a balanced and controlled distribution of workload across the cluster without the risk of overloading traffic.

There can be situations where multiple requests from different nodes are received almost simultaneously, leading to a transmission of multiple accepts and the subsequent reception of multiple data payloads. While such situations are unlikely in a First-Come-First-Serve approach, they can occur when acceptance windows are employed or when message travel times vary significantly across the network. To address this, an in- coming queue is utilized. This allows to buffer work packages, in case multiple payloads are received more or less simultaneously, and to processed them one after another in the order they were received. In cases where the incoming buffer runs full, all further requests are denied until there is sufficient space available. Alternatively, if using an incoming buffer is not feasible, one might implement accept throttling or rate limiting techniques. This involves sending out accepts with a restricted maximum rate, ensuring a controlled and manageable flow of incoming packages.

### 5.6 Redundancies and Pipelining

In embodiments, an ONC can be particularly designed to provide stable and robust data processing in volatile networks of edge devices. In a scenario where nodes are likely to leave the network it can be beneficial to introduce redundancies. In our framework this is really simple, since new nodes, once incorporated into the cluster by the network backend, automatically and immediately take part in the task orchestration. Hence the number of nodes is a valuable control parameter and the system will generally benefit from having more nodes available as it provides more package routing options. For instance, in case a specific step turns out to be a bottleneck the user can just add more nodes working on this step. This way more branches will be available to go through that bottleneck.

In many application, there is a steady, well-paced stream of similar sized data packages to be processed. In embodiments, branches and pipelines will form in a self-organized manner, since handling of orchestration messages is typically significantly faster compared to the actual computation.

### 5.7 Branching and Parallel Execution

Until now, embodiments considered tasks segmented into a sequence of consecutive steps. However, the orchestration logic also supports parallel execution. The only additional requirement compared to what was discussed so far is to promote the stepID from an integer to a pair of integers or - equivalently - the introduction of a new field partID in the package meta-information.

Fundamentally, adding parallel tasks necessitated only a single extra tier in the task-step hierarchy (which now becomes task-step-part), with the core orchestration logic staying unchanged. Specifically, when initiating a parallel step, the preceding step is structured to generate multiple intermediate work packages instead of a single one, each distinguished by a partID field. Now the usual broadcast-response mechanism can be employed, where various nodes pick up the work and perform computations on one of the parallel branches. Following a parallel step, the subsequent step can be an aggregator step, which is tailored to reassemble the pieces into correct order. This can be implemented using an additional aggregation queue.

Once all required data pieces have been collected, the package is moved into the main processing queue. The aggregator then retrieves the package, and the regular, sequential process resumes.

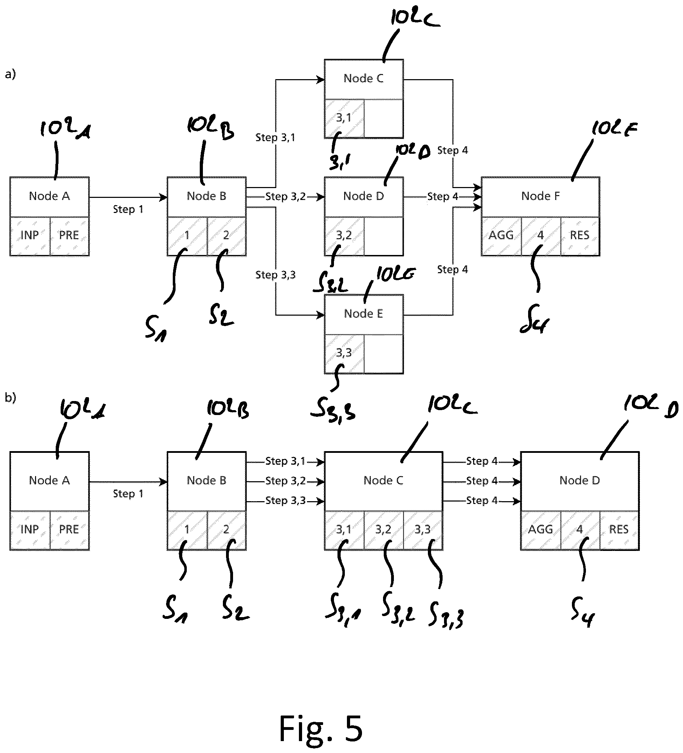

An example can be found in Fig. 5a, where Node F has the Aggregation step (AGG) loaded.

Specifically, Fig. 5a shows a schematic representation of an edge computing network comprising six network nodes 102_{A}, 102_{B}, 102_{C}, 102_{D}, 102_{E} and 102_{F} that perform four computational steps s₁, s₂, s₃ and s₄, where a third computational step s₃ comprises three sub steps s_{3,1}, s_{3,2} and s_{3,2} that are performed in parallel by the nodes 102_{C}, 102_{D} and 102_{E}. Specifically, the first node 102_{A} receives the input data, a second node 102_{B} performs steps s₁ and s₂, where nodes 102_{C}, 102_{D} and 102_{E} perform the three sub steps s_{3,1}, s_{3,2} and s_{3,2} in parallel, where the sixth node 102_{F} performs an aggregator step, the fourth step s₄ and obtains the result RES. In other words, Fig. 5a shows a parallel step execution, where step s₃ is subdivided into three parts which are processed in parallel.

As shown in Fig. 5a, when Node 102_{F} receives one part of the required data payload (e.g. part 1 from Node 102_{C}), this part is placed in the aggregation queue. Every time a new part arrives, the aggregator can check whether all parts are available and resume the process.

It is important to note that it is possible for a single node to execute all parallel parts in a sequential manner as illustrated in Fig. 5b.

Specifically, Fig. 5b shows a schematic representation of an edge computing network comprising four nodes 102_{A}, 102_{B}, 102c and 102_{D}, that perform four computational steps s₁, s₂, s₃ and s₄, where a third computational step s₃ comprises three sub steps s_{3,1}, s_{3,2} and s_{3,2} that are performed in parallel by the third node 102c. Specifically, the first node 102_{A} receives the input data, a second node 102_{B} performs steps s₁ and s₂, where the third node 102_{C} performs the three sub steps s_{3,1}, s_{3,2} and s_{3,2} in parallel, where the fourth node 102_{D} performs an aggregator step, the fourth step s₄ and obtains the result RES. In other words, Fig. 5b shows a parallel step execution, where a single device is used to compute parallel portions of one step.

This arrangement of Fig. 5b offers the advantage that large steps can be broken down even on one device, if required.

Finally, it is noted that aggregation steps might also be used to gather input data from multiple sources, so-called (early) sensor fusion [11, 12, 13].

Note that in embodiments a parallel execution of sub-steps does not necessarily mean the sub-steps are processed parallel in time. Rather, parallel means that the sub-steps, e.g., sub steps s_{3,1}, s_{3,2} and s_{3,2}, are processed by one or more network nodes and a subsequent step, e.g., step s₄, is only performed after the sub-results of the sub-steps are available and can be combined/aggregated for proceeding with the subsequent step.

### 6. Fault Resistance Strategies

In a network cluster without central control unit, ensuring stable and reliable data flow is challenging. In embodiments, this challenge is addressed using acknowledgment messages, which are a type of orchestration message (compare Section 3). This mechanism is enabled by the work package manager (WPM), a queuing and monitoring system, implemented locally and independently on each device. The WPM tracks the status of work packages (i.e., "unassigned", "assigned", "done"; refer to Section 5.2). In general, the work package manager caches payload data at specific points in the data flow until an acknowledgment is received, which releases the current device from monitoring responsibilities. An acknowledgements is triggered whenever payload data arrives as a compute message (see Section 1) and sent back to the origin of the data package. In the following, a number of options are discusses, how such a mechanism can be implemented.

Careful implementation of one (or a combination) of the acknowledgment mechanisms which will be discussed in the following can reduce (or even minimize) the occurrence of data loss to a considerably low or even negligible rate. In general, in some embodiments, multiple retransmissions and possibly redundant computations might be preferred over the risk of non-transmission and data loss.

### 6.1 Retransmissions and Acknowledgements Bursts

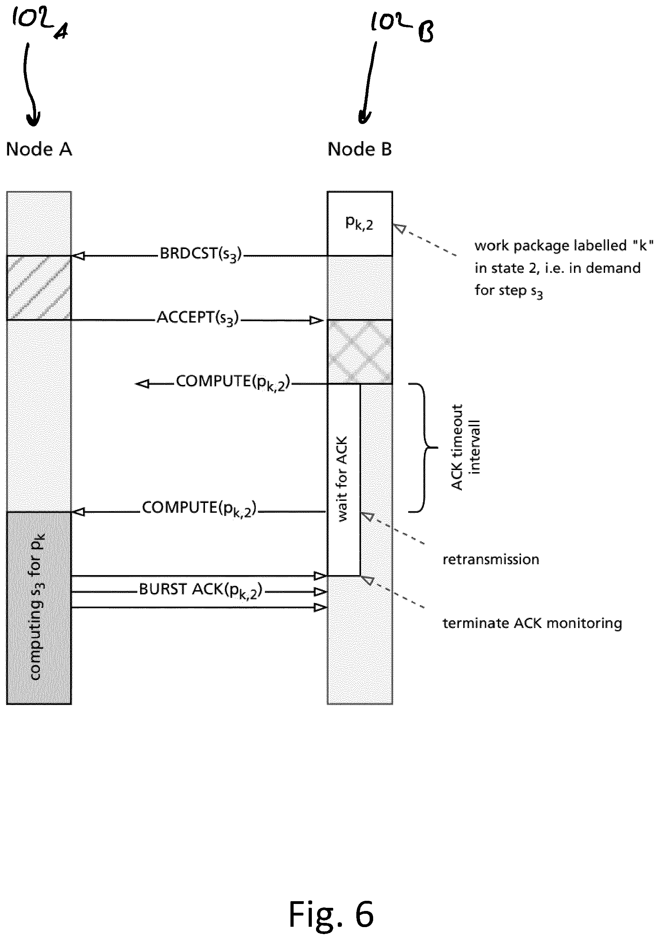

If an acknowledgment is not received by its designated target, this can occur for two reasons: either the compute message has been successfully delivered but the acknowledgment was lost - or the compute package itself failed to reach its destination. In either case, in accordance with embodiments, the cached package is retransmitted after a brief interval, as illustrated in Fig. 6.

Specifically, Fig. 6 shows in a sequence diagram the transmission of messages between a first network node 102_{A} and a second network node 102_{B}, enabling the second node 102_{B} to distribute a processing of a work package p_{k,2} by a respective computational step s₂ to the first network node 102_{A}, where it is exemplarily assumed that one of the messages is lost.

In Fig. 6, transmissions of several messages are shown. Thereby, BRDCST(s₃) designates a broadcast of a request message requesting an availability to perform the third computational step, where ACCEPT(s₃) designates an accept message indicating an availability to perform the third computational step s₃, where COMPUTE (p_{k,2}) is a compute message triggering the first node 102_{A} to perform the respective computational step indicated in the work package p_{k,2}, i.e. the third computational step s₃, where ACK (p_{k,2}) is an acknowledgement message indicating a successful reception of the compute message.

Thereby, in Fig. 6 it is exemplarily assumed that no acknowledgement message is received in response to the first transmission of the compute message COMPUTE (p_{k,2}), which is why the second network node 102_{B} retransmits the compute message COMPUTE (p_{k,2}).

In other words, Fig. 6 shows in a sequence diagram a retransmission after failed package transfer. In this sequence diagram, following a positive response (accept) regarding an earlier broadcast request, the second node 102_{B} sends a compute message to the first Node 102_{A}. As this message does not arrive at the second node 102_{B}, it is retransmitted once the acknowledgement timer at the second node 102_{B} runs out. This time, the package arrives at the first node 120_{A}, which, in return, emits multiple acknowledgements (burst).

Should the acknowledgment alone have been lost, this process results in the data being sent twice. In this case, the input handler (compare Orchestration Handler in Fig. 3) on the receiving end is designed to recognize and discard any duplicate packages. As acknowledgement messages are small (they essentially only contain the package identifier, compare Table 1 above) it might be affordable to send them multiple times as bursts in case connections are generally unreliable, due to, for instance, strong external radio interference in a wireless setup.

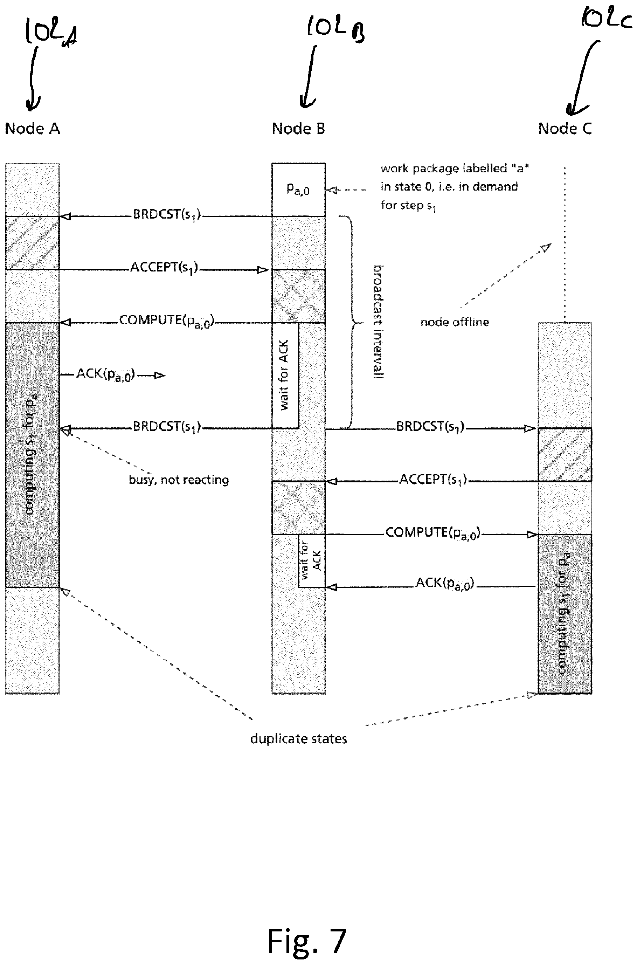

Provided the input message handler reliably identifies and discards duplicates, there can still be occasions where - enabled by this mechanism - data packages may be duplicated within the cluster as they use different branches. An example is given in Fig. 7, where a second node 102_{B} sends a work package to a first node 102_{A} for computation of a first step s₁. However, the as the acknowledgement fails to reach the second node 102_{B}, another broadcast request is scheduled. Now, a third node 102_{C} picks up the package (due to, e.g., the first node 102_{A} being busy computing the very same package). As soon as both nodes have successfully computed the first computational step s₁ of package p_{a,0}, there is a duplicate work package in the system.

Specifically, Fig. 7 shows in a sequence diagram the transmission of messages between a first network node 102_{A}, a second network node 102_{B} and a third network node 102c, enabling the second node 102_{B} to distribute a processing of a work package p_{a,0} by a respective computational step s₁ to one out of the first network node 102_{A} and the third network node 102_{C}, where it is exemplarily assumed that one of the messages is lost, resulting in packet duplication.

Thereby, in Fig. 7, transmissions of several messages are shown. Thereby, BRDCST(sₖ) designates a broadcast of a request message requesting an availability to perform the k-th computational step, where ACCEPT(sₖ) designates an accept message indicating an availability to perform the k-th computational step sₖ, where COMPUTE (p_{i,k}) is a compute message triggering the respective network node to perform the respective computational step indicated in the work package p_{i,k}, i.e. the k-th computational step indicated by the i-th work package associated with the i-th input data, where ACK (p_{i,k}) is an acknowledgement message indicating a successful reception of the respective compute message.

In other words, Fig. 7 shows in a sequence diagram duplicates originating from failed acknowledgements. A first node 102_{A} receives a package p_{a,0} from a second node 102_{B} and starts the computation. However, it fails to send an acknowledgement. The second node 102_{B} repeats the broadcast request and the third node 102_{C} picks up the package. Eventually, there is the identical state of package pₐ (specifically its intermediate results after step s₁) on both nodes 102_{A} and 102_{C}.

In embodiments, duplicates are not a concern, since: a) in embodiments occasional redundant computations are performed rather than to lose packages - and b) in most cases, duplicates are only temporary. As soon as both instances of the same work package travel through the same node in a later stage of the process, the associated input handler will discard every but the first instance. Regarding b) it has to be ensured that the input handler only discards duplicate packages within a given, defined time window. This windows can be shorter than an overall package monitoring timer (if used) in order not to miss the next iteration of that package in case it got lost at a later stage of the previous iteration.

### 6.2 End-to-End Acknowledgement

Oftentimes, even in applications where the network exhibits a certain degree of volatility, input nodes may remain relatively stable, for instance, due to being connected to stationary sensors or cameras. Similarly, the target node may be linked to a more stable network, in order to provide, e.g., stationary uplink capabilities. Under these conditions, a straightforward end-to-end monitoring mechanism can suffice in order to realize a fault-tolerant data flow. Upon dispatching a work package, the initiating node additionally sends a notification message to the target node, which includes the package identifier, signaling the scheduled arrival of the work package result. Concurrently, a timer is initiated with a predefined duration. Upon successful reception of the work package result, the target node issues an acknowledgment to the origin node, marking the work package as "done" and terminating the monitoring process. If the acknowledgment is not received before expiration of the timer, the package is considered lost and reverted to the "unassigned" status, rendering it available for reassignment in a subsequent broadcast request iteration. This end-to-end acknowledgment strategy may occasionally result in a work package being processed multiple times (compare above discussion), specifically if notification or acknowledgment messages are lost. However, as each work packages comes with a unique ID, the target node is able to identify and, if necessary, discard any duplicate packages.

### 6.3 Passage Acknowledgements

In embodiments, the previously described monitoring approach can be modified by eliminating the reliance on a fixed timer to account for the end-to-end path. Instead, work packages emit intermediate acknowledgments after each successful computation step. Upon receiving one of these "still alive" messages, which are linked to a work package, the origin node resets its counter. This modification enables more precise "stepwise" monitoring of the package's progress through the network. Similar to the end-to-end acknowledgment strategy, the work package can be marked, for example, as "done", upon the receipt of the final acknowledgment and the monitoring process will terminate.

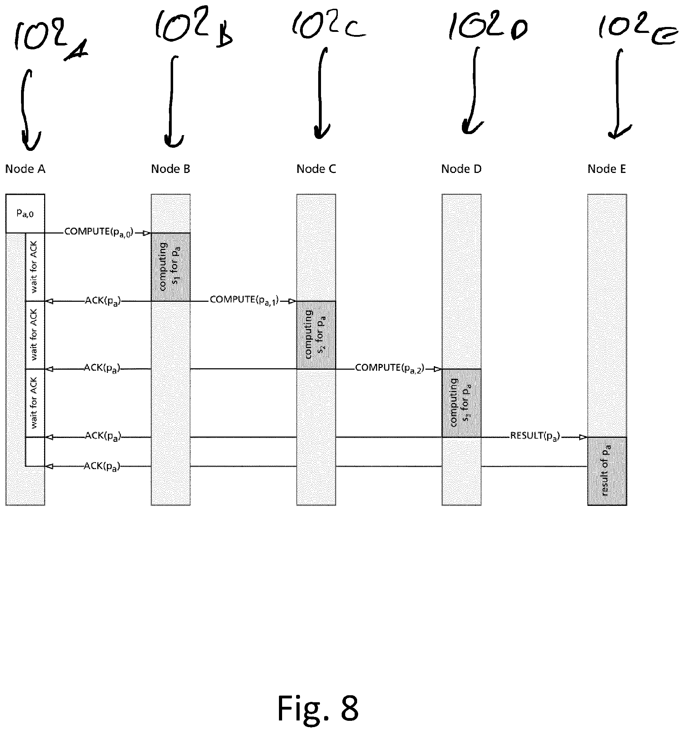

Fig. 8 shows in a sequence diagram the transmission of messages between five network node 102_{A} to 102_{E} in order to allow for a distribution of a processing of a work package pₐ from a first node 102_{A} to the other network nodes 102_{B} to 102_{E} for processing the work package pₐ by respective computational steps s₁ to s₃.

Thereby, in Fig. 8, transmissions of several messages are shown, where COMPUTE (p_{i,k}) is a compute message triggering the respective network node to perform the respective computational step indicated in the work package p_{i,k}, i.e. the k-th computational step indicated by the i-th work package associated with the i-th input data, where ACK (p_{i,k}) is an acknowledgement message indicating a successful reception of the respective compute message.

In other words, Fig. 8 shows in a sequence diagram passage acknowledgements. In this example of a three-step task, an acknowledgement message is sent back to the monitoring first node 102_{A} after every computation, indicating the process is still alive and resetting the timer. For reasons of clarity, all orchestration message apart from compute and ACK have been omitted.

### 6.4 Joint Responsibility

In situations where the origin node cannot be considered as reliable, a mechanism of joint responsibilities might be employed. The key concept revolves around a shared monitoring responsibility between pairs of consecutive nodes in the pipeline for each work package. This ensures that if one node fails, the data remains accessible, allowing the process to either continue or restart. In the following example, this technique is discussed in detail. A work package progresses through a sequence of nodes, specifically from node A to B to C. To simplify the explanation, broadcasting and responses are omitted:
1. Initial transmission (A to B): A first node 102_{A} sends the data to a second node 102_{B}. Once the second node 102_{B} acknowledges, both the first node 102_{A} and the second node 102_{B} share joint responsibility. This means both nodes can ensure integrity and availability of the data payload in the transmission process.
2. Shared Responsibility: The first node 102_{A} retains a copy of the data and remains responsible for it, even though the second node 102_{B} performs computations on the package and now has primary responsibility for forwarding the data to a third node 102c. This redundancy ensures that if the second node 102_{B} fails before successfully transmitting the data to the third node 102c, the first node 102_{A} can still retransmit the data, either to the second node 102_{B} (once it is back online) or find another intermediary fourth node 102_{D}.
3. Intermediate Handoff: The second node 102_{B} forwards the data to the third node 102_{C}. Once the third node 102_{C} successfully receives the data and sends an acknowledgment back to the second node 102_{B} (and indirectly to the first node 102_{A} - or directly, depending on the implementation), the first node 102_{A} is then relieved of its responsibilities.
4. New Shared Responsibility: Now, the second node 102_{B} and the third node 102c share the joint responsibility for the data until it is successfully transmitted to the next node in the path (if there is one) or until the data reaches its final destination.

This approach adds an extra layer of reliability and data redundancy. It ensures that at least two nodes have a copy of the data payload until it is safely delivered further down the line.

### 6.5 Chain Responsibility Pattern

In the joint responsibility mechanism, it might occur that both nodes which share responsibility drop out in which case the package is lost. Even though this is highly unlikely, it still can be account for this possibility by generalizing the concept to multiple nodes, which can be referred to as a chain-responsibility pattern. There is always a chain of n nodes responsible for monitoring and only if a new node joins in, the currently oldest one in the chain will be released, thus further reducing the risk of package loss.

### 7. Detailed Example

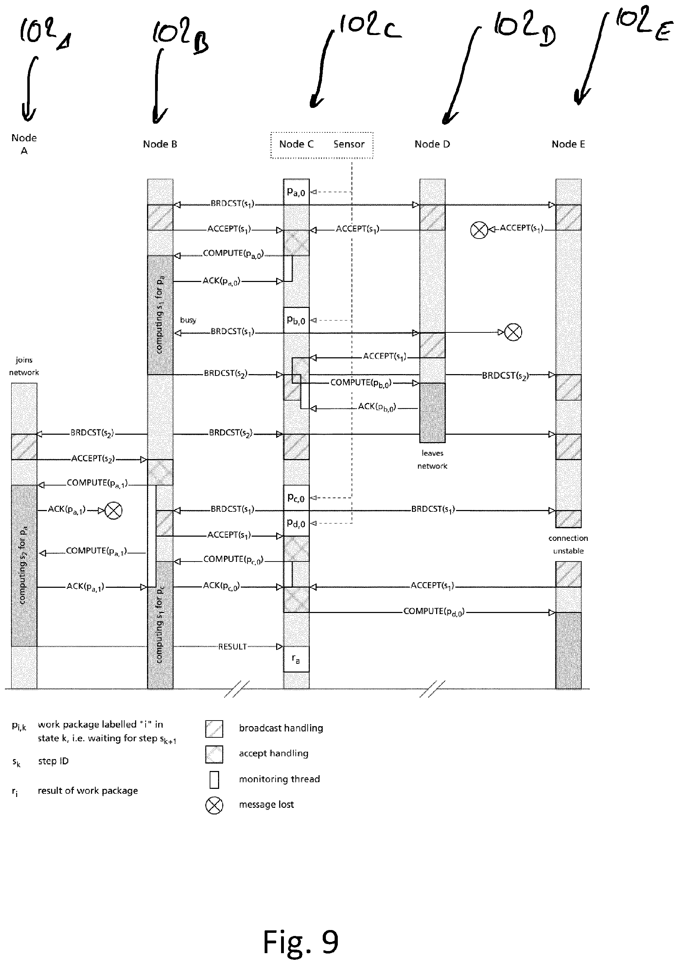

In Fig. 9, a detailed example of an ONC configuration involving five devices 102_{A} to 102_{E} is depicted. In this example, a third node 102_{C} is equipped with a sensor, from which it receives input data packages pₐ, p_{b}, p_{c}, p_{d} ... at specified points in time. The third node 102c is also designated as the final destination for computation results and it has an end-to-end monitoring mechanism implemented, following section 6.2. Additionally, all nodes 102_{A} to 102_{E} confirm the receipt of computation packets through direct acknowledgments, but without bursting (compare section 6.1).

Specifically, Fig. 9 shows in a sequence diagram the transmission of messages between five network nodes 102_{A} to 102_{E}, enabling the third network node 102c to distribute a processing of its work packages pₐ, p_{b}, p_{c}, p_{d} by respective computational steps sᵢ to the other network nodes 102_{A}, 102_{B}, 102_{D} and 102_{E}. Thereby, it is exemplarily assumed that The first node 102_{A}, joins the network delayed, whereas the fourth node 104_{D} suddenly drops out.

Thereby, in Fig. 9, transmissions of several messages are shown. Thereby, BRDCST(sₖ) designates a broadcast of a request message requesting an availability to perform the k-th computational step, where ACCEPT(sₖ) designates an accept message indicating an availability to perform the k-th computational step sₖ, where COMPUTE (p_{i,k}) is a compute message triggering the respective network node to perform the respective computational step indicated in the work package p_{i,k}, i.e. the k-th computational step indicated by the i-th work package associated with the i-th input data, where ACK (p_{i,k}) is an acknowledgement message indicating a successful reception of the respective compute message.

In other words, Fig. 9 shows a sequence diagram of a five-node cluster with node drop-outs. The first node 102_{A}, joins the network delayed, whereas the fourth node 104_{D} suddenly drops out. Only the third node 102_{C} has a sensor attached and receives input data.

As shown in Fig. 9, the first incoming package pₐ triggers a broadcast, requesting for the first computational step s₁, which is sent to all other nodes. The nodes 102_{B}, 102c and 102_{E} answer positively, however the accept message of the fifth node 102_{E} fails to reach the second node 102_{B}. Among the two successful accepts, the third node 102c selects the second node 102_{B} for the task. The second node 102_{B} receives the package, starts processing and issues an acknowledgement which terminates the monitoring thread on the third node 102c. The process is repeated with the arrival of a second package p_{b}. The second node 102_{B}, engaged in processing pₐ, does not respond. Hence, the third node 102c receives and acknowledges p_{b}, but while computing, disconnects from the network (e.g. due to power loss or moving out of range). Concurrently, the second node 102_{B} finishes computations on pₐ and sends out a broadcast request for the second computational step s₂, receiving no responses due to the absence of nodes with second computational step s₂ capabilities. After a while, the first node 102_{A} enters the network, equipped with the second computational step s₂, and responds to the subsequent broadcast. It processes the second computational step s₂ of pₐ, but fails to send an acknowledgment to the second node 102_{B}. After the second nodes 102_{B} monitoring timer expires, the data is resent. The first node 102_{A}, recognizing the data (e.g., via hashing), rejects it but sends a new acknowledgment that successfully reaches the second node 102_{B}. Following the successful computation of the second step s₂ by the first node 102_{A}, the results are dispatched to the third node 102c, concluding the monitoring for pa's path (not depicted).

Meanwhile, the third node 102c receives two additional packages (p_{c} and p_{d}) from its sensor, which are allocated to the second node 102_{B} and the fifth node 102_{E}, respectively. At this point, package p_{b}, which was lost as the fourth node 102_{D} left the network, is still monitored by the third node 102_{C}. At a later point in time, the third node 102_{C} might identify the absence of a results r2, will consider the package as lost and reschedule it.

### 8. Multiple Tasks and Complex Workflows

Although the example previously discussed is complex, the framework in accordance with embodiments is capable of managing setups of even greater complexity. This can include more elaborate direct acknowledgment and retransmission mechanisms, paired with sophisticated monitoring and responsibility schemes, as described in Section 6. The extent to which these features can be adapted depends on the specific requirements and the actual application of the ONC.

An ONC is not limited to performing only one specific task at a time. As an example, a wildlife research scenario is considered by way of example, where the wildlife research scenario involves a setup of very lightweight mobile nodes, such as drones or tagged animals. In this setup, one node is equipped with a camera that periodically captures images. Using conventional deep learning methods, a neural network for object detection is trained to identify animals in these images. If an animal is detected, a second neural network can be activated to perform image super-resolution on demand. This second network typically employs a Generative Adversarial Network (GAN) architecture, which has learned to enhance low-resolution images with high-resolution details. Specifically, a so-called Super-Resolution Generative Adversarial Network (SRGAN) is a specialized type of GAN consists of two key components: the generator, which upscales low-resolution images to high-resolution counterparts, and the discriminator, which, during training, evaluates whether the upscaled images are real (high-resolution) or fake (generated). In the sequential splitting approach discussed earlier, advantage can be made of the generator following a feed-forward architecture, which includes elements like convolution layers, upsampling layers, and residual blocks, to integrate it effectively into our sequential step design. Since super-resolution GANs are particularly resource-intensive neural networks, it is practical to activate them only if the object detection CNN identifies something of interest. If nothing promising is detected, the image can be discarded.

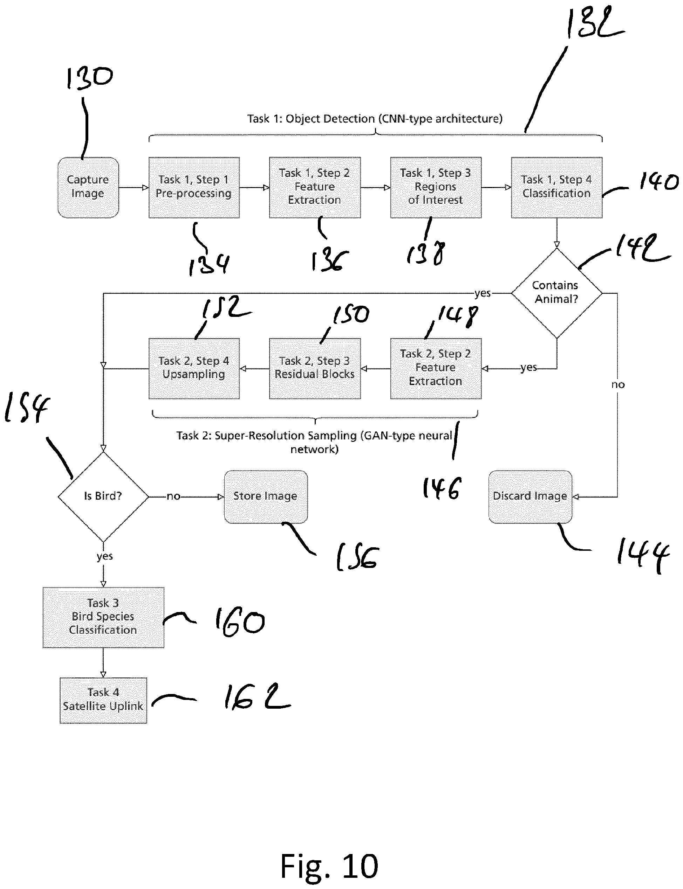

A data flow for this scenario is depicted in Fig. 10. Specifically, Fig. 10 shows a data flow diagram for a workflow comprising three tasks. First, an image is captured 130. Then, the captured image is processed by a first task 132 (Object Detection (CNN-type architecture). The first task comprises a first step 134 of pre-processing, a second step 136 of feature extraction, a third step 138 of regions of interest and a fourth step 140 of classification. Based on the results of the first task 132 it is determined 142 whether the captured image contains animals. If the captured image does not contain images, then it is discarded 144. If the captured image contains an animal then a second task 146 is performed. The second task 146 comprises a second step 148 of feature extraction, a third step 150 of residual blocks and a fourth step 152 of upsampling. Based on the results of the second task 146 and/or directly based on the results of the first task 132 it is determined 154 whether the animal is a bird. If the animal is not a bird, then the image is stored 156, e.g., in a memory. If the animal is a bird, then a third task 160 of bird species classification and a fourth task 162 of satellite uplink is performed.

In other words, Fig. 10 shows a multi-task example application: Shown is an example application for a workflow with several tasks, involving simple logic branching points: A wildlife researcher is operating an ONC which captures images and runs an object detection task in order to identify animals. In case the image does contain an animal, it is super-sampled using a second neural network. If the animal is a bird, the super-sampled image is used as an input for a third neural network and the result is uploaded to a satellite. Grey rectangles represent individual steps and can be distributed among available devices in an ONC. For clarity, Tasks 3 and 4 contain only a single step.

As shown in Fig. 10, the object detection neural network, designated as first task, is divided into several steps, as discussed in earlier examples. The super-resolution GAN, identified as second task, is also split into multiple steps due to its extensive number of parameters. Assuming the researcher operating the ONC has a specific interest in birds, a third task might be introduced, as depicted in the example. This task involves a network specially trained to classify detailed bird species from the upscaled camera images, specifically within the previously identified regions of interest. The precise species is determined and communicated to the researcher immediately (e.g., via satellite connection, constituting a fourth task) only if the animal is initially recognized as a bird. If the animal is not a bird, the image is saved for later, less urgent processing.

This example demonstrates that the framework in accordance with embodiments can implement a complex workflow comprising several different tasks. The individual steps (represented as grey boxes in the Fig. 10) can be distributed among available devices in the network, treating them as if they were steps of a single task. The logical branching points might ideally be implemented as part of the respective preceding step. For instance, the fourth step of the first task can - based on the classification result - either discard the image or invoke the second task.

### 9. System architecture

From the hardware perspective, an OD aligns with the standard components found in modern computer or microcontroller devices. This includes a dedicated processing unit (e.g. CPU), ideally but not necessarily in combination with fast caching levels, permanent storage solutions like SSDs or HDDs and fast temporary memory (RAM). Finally, connectivity options for network communication, such as through antennas, receivers, or other networking interfaces like Wi-Fi, Ethernet, and Bluetooth, are required. The device in- corporates a power supply system, which can either be stationary, deriving power from an external source, or mobile, powered by an internal battery. This configuration is prevalent across most modern devices, including most edge and loT devices. When necessary for the particular application, additional specialized hardware, such as GPUs, other specialized accelerators, or sensor inputs for gathering environmental data, is integrated.

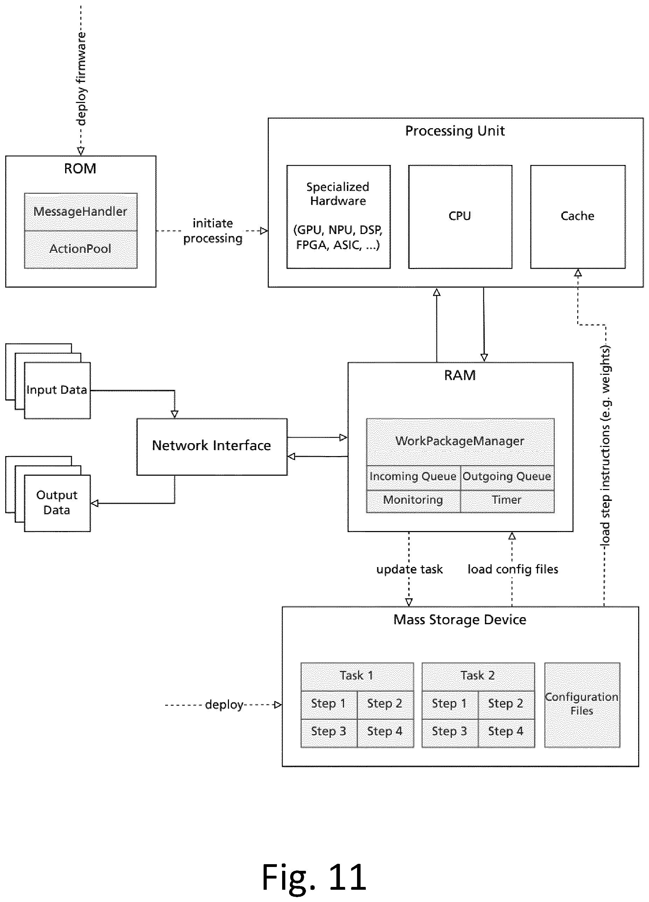

Fig. 11 illustrates an example realization of a high-level system architecture of an OD. Specifically, Fig. 11 shows a schematic representation of a high-level system architecture example of a network node. Solid arrows denote the data flow, dotted arrows represent interactions between components. The processing unit may comprise a traditional CPU or a specialized processor such as an accelerator, or it may include a combination of both. Ideally, it is paired with a cache system, enhancing performance and energy efficiency. The ROM unit is preferred but optional, as also RAM and mass storage can be utilized to host MessageHandler and ActionPool.

General message handling instructions, as well as any orchestration "actions" initiated according to incoming trigger messages are permanently deployed on a read-only-memory unit. User data is transmitted to and from the system via a generic network interface, which provides peer-to-peer send and receive functionality, as discussed in detail in section 1. In case a "standard" system architecture like this is available, only data earmarked for processing utilizes the RAM, whereas the actual step instructions (containing, e.g., weights of a neuronal network), are loaded onto one of the cache levels of the processing unit. Although it is possible to reassign steps stored in the cache during operation via configuration messages (as discussed in Fig. 3), under normal circumstances, these steps remain unchanged for a time scale significantly longer than the execution of a single work package. This facilitates pipelining and enables energy-efficient operation by eliminating the overhead associated with transferring data between different memory levels.

The work package manager resides in the regular RAM, as it dynamically operates on packages and pro- vides monitoring, timers and queueing. Tasks are typically deployed onto a mass storage device and can be updated manually or via administrative messages, schematically indicated by dashed arrows in the figure.

On the software side, an OD requires an operating system (OS) which supports multitasking and/or multithreading capabilities. This is essential for executing monitoring tasks, which operate in the background, simultaneously with primary computations.

### 10. Further embodiments

The network device described herein is capable of orchestrating distributed multi-stage computational tasks in heterogeneous communication networks in a self-organized, local and de-centralized manner. It ensures flexible and reliable data processing in unreliable and highly dynamic environments. Particular strengths are the automatic and seamless integration of new nodes into a cluster of such devices and the minimal to negligible level of data loss due to spontaneous node dropouts. Finally, by enabling complex tasks to be processed in small segments which can utilize specialized hardware and static cache memory for their instructions, the device attains optimal pipelining performance and energy efficiency, which is critical, e.g. in low-powered mobile ad-hoc networks. Finally, the framework is capable of handling complex multi-task workflows with branching points as well as parallel steps.

Embodiments described herein can be applied to any network consisting of multiple nodes, which are intended to perform cooperative computational tasks.

For example, embodiments described herein can be applied to simultaneous localization and mapping (SLAM) on a fleet of Autonomous Mobile Robots (AMR) [14, 15, 16, 17].

For example, embodiments described herein can be applied to navigation for autonomous swarms of drones, in particular determination of points of interest during flight time beyond the line of sight [18, 19, 20, 21, 22, 23].

For example, embodiments described herein can be applied to local preprocessing of data on sensor networks of massive loT applications, such as agriculture monitoring.

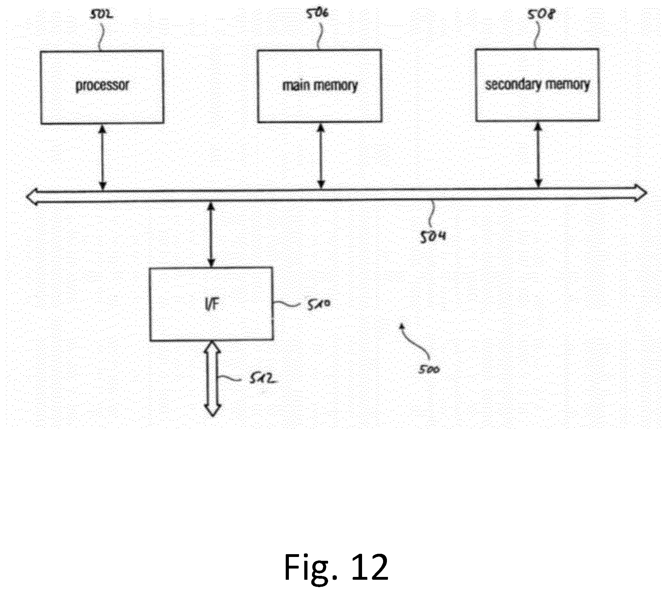

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 12 illustrates an example of a computer system 500. The units or modules as well as the steps of the methods performed by these units may execute on one or more computer systems 500. The computer system 500 includes one or more processors 502, like a special purpose or a general-purpose digital signal processor. The processor 502 is connected to a communication infrastructure 504, like a bus or a network. The computer system 500 includes a main memory 506, e.g., a random-access memory (RAM), and a secondary memory 508, e.g., a hard disk drive and/or a removable storage drive. The secondary memory 508 may allow computer programs or other instructions to be loaded into the computer system 500. The computer system 500 may further include a communications interface 510 to allow software and data to be transferred between computer system 500 and external devices. The communication may be in the from electronic, electromagnetic, optical, or other signals capable of being handled by a communications interface. The communication may use a wire or a cable, fiber optics, a phone line, a cellular phone link, an RF link and other communications channels 512.

The terms "computer program medium" and "computer readable medium" are used to generally refer to tangible storage media such as removable storage units or a hard disk installed in a hard disk drive. These computer program products are means for providing software to the computer system 500. The computer programs, also referred to as computer control logic, are stored in main memory 506 and/or secondary memory 508. Computer programs may also be received via the communications interface 510. The computer program, when executed, enables the computer system 500 to implement the present invention. In particular, the computer program, when executed, enables processor 502 to implement the processes of the present invention, such as any of the methods described herein. Accordingly, such a computer program may represent a controller of the computer system 500. Where the disclosure is implemented using software, the software may be stored in a computer program product and loaded into computer system 500 using a removable storage drive, an interface, like communications interface 510.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine-readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

### List of References

[1] Wazir Zada Khan, Ejaz Ahmed, Saqib Hakak, lbrar Yaqoob, and Arif Ahmed. Edge computing: A survey. Future Generation Computer Systems, 97:219-235, August 2019.
[2] Xiaofei Wang, Yiwen Han, Victor C. M. Leung, Dusit Niyato, Xueqiang Yan, and Xu Chen. Conver- gence of edge computing and deep learning: A comprehensive survey. IEEE Communications Surveys, 22(2):869-904, 2020.
[3] Jorge Portilla, Gabriel Mujica, Jin-Shyan Lee, and Teresa Riesgo. The extreme edge at the bottom of the internet of things: A review. IEEE Sensors Journal, 19(9):3179-3190, May 2019.
[4] Francis M David, Jeffrey C Carlyle, and Roy H Campbell. Context switch overheads for linux on arm platforms. In Proceedings of the 2007 workshop on Experimental computer science, pages 3-es, 2007.
[5] Kun Suo, Yong Shi, Chih-Cheng Hung, and Patrick Bobbie. Quantifying context switch overhead of artificial intelligence workloads on the cloud and edges. In Proceedings of the 36th Annual ACM Symposium on Applied Computing, SAC '21. ACM, March 2021.
[6] Nello Cristianini and John Shawe-Taylor. An introduction to support vector machines and other kernel- based learning methods. 2000.
[7] Guolin Ke, Qi Meng, Thomas Finley, Taifeng Wang, Wei Chen, Weidong Ma, Qiwei Ye, and Tie-Yan Liu. Lightgbm: A highly efficient gradient boosting decision tree. In Neural Information Processing Systems, 2017.
[8] Torsten Ohlenforst, Moritz Schreiber, Felix Kreyß, and Manuel Schrauth. Enabling distributed inference of large neural networks on resource constrained edge devices using ad hoc networks. In International Symposium on Distributed Computing and Artificial Intelligence, pages 145-154. Springer, 2023.
[9] M. Scott Corson and Joseph P. Macker. Mobile ad hoc networking (manet): Routing protocol performance issues and evaluation considerations. RFC, 2501:1-12, 1999
[10] S. Sharmila and T. K. Shanthi. A survey on wireless ad hoc network: Issues and implementation. 2016 International Conference on Emerging Trends in Engineering, Technology and Science (ICETETS), pages 1-6, 2016.
[11] Bahador Khaleghi, Alaa M. Khamis, Fakhri Karray, and Saiedeh Navabzadeh Razavi. Multisensor data fusion: A review of the state-of-the-art. Inf. Fusion, 14:28-44, 2013.
[12] Joelle Al Hage, Maan E. El Najjar, and Denis Pomorski. Multi-sensor fusion approach with fault detec- tion and exclusion based on the kullback-leibler divergence: Application on collaborative multi-robot system. Information Fusion, 37:61-76, September 2017.
[13] Mary B. Alatise and Gerhard Petrus Hancke. A review on challenges of autonomous mobile robot and sensor fusion methods. IEEE Access, 8:39830-39846, 2020.
[14] Miquel Kegeleirs, Giorgio Grisetti, and Mauro Birattari. Swarm slam: Challenges and perspectives. Frontiers in Robotics and Al, 8, March 2021.
[15] Sajad Saeedi, Michael Trentini, Mae Seto, and Howard Li. Multiple-robot simultaneous localization and mapping: A review: Multiple-robot simultaneous localization and mapping. Journal of Field Robotics, 33(1):3-46, July 2015.
[16] Nathalie Majcherczyk, Daniel Jeswin Nallathambi, Tim Antonelli, and Carlo Pinciroli. Distributed data storage and fusion for collective perception in resource-limited mobile robot swarms. IEEE Robotics and Automation Letters, 6(3):5549-5556, July 2021.
[17] Ragesh K. Ramachandran, Zahi Kakish, and Spring Berman. Information correlated lévy walk exploration and distributed mapping using a swarm of robots. IEEE Transactions on Robotics, 36(5):1422-1441, October 2020.
[18] Jennifer Gielis, Ajay Shankar, and Amanda Prorok. A critical review of communications in multi-robot systems. Current Robotics Reports, 3(4):213-225, August 2022.
[19] K. N. McGuire, C. De Wagter, K. Tuyls, H. J. Kappen, and G. C. H. E. de Croon. Minimal navigation solution for a swarm of tiny flying robots to explore an unknown environment. Science Robotics, 4(35), October 2019.
[20] Fabian Schilling, Fabrizio Schiano, and Dario Floreano. Vision-based drone flocking in outdoor environ- ments. IEEE Robotics and Automation Letters, 6(2):2954-2961, April 2021.
[21] Fabian Schilling, Enrica Soria, and Dario Floreano. On the scalability of vision-based drone swarms in the presence of occlusions. IEEE Access, 10:28133-28146, 2022.
[22] Enrica Soria, Fabrizio Schiano, and Dario Floreano. Distributed predictive drone swarms in cluttered environments. IEEE Robotics and Automation Letters, 7(1):73-80, January 2022.
[23] Konstantinos Bezas, Georgios Tsoumanis, Constantinos T. Angelis, and Konstantinos Oikonomou. Coverage path planning and point-of-interest detection using autonomous drone swarms. Sensors, 22(19):7551, October 2022.

### Abbreviations

- OD: orchestration device
- ONC: orchestrating network cluster (collective ensemble of multiple, connected OD's)
- WP: work package
- WPM: work package manager
- INP: input data or input channel
- RES: final result of a computation
- ACK: acknowledgement
- BRDCST: broadcast request
- MLTCST: multicast request
- s₁, s₂, ..., sₙ: step 1, step 2, ..., step n, wherein n is a natural number greater than or equal to two, n ≥ 2
- t₁, t₂, ...: task 1, task 2, ...
- pₐ, p_{b}, ...: work package with label "a", work package with label "b", ...
- CPU: Central Processing Unit
- RAM: Random Access Memory
- SRAM: Static Random Access Memory
- ROM: Read-Only-Memory
- SSD: Solid State Disk
- HDD: Hard Disk Drive
- GPU: Graphics Processing Unit
- NPU: Neural Processing Unit
- DSP: Digital Signal Processor
- FPGA: Field-Programmable Gate Array
- ASIC: Application-Specific Integrated Circuit
- loT: Internet of Things

## Claims

1. Network node (102_{A}) for an edge computing network (100),
wherein the network node (102_{A}) is configured to obtain input data (INP) to be processed by a computational task, wherein the computational task comprises a plurality of computational steps (s₁,s₂, ... , sₙ),
wherein the network node (102_{A}) is configured to distribute a processing of at least one computational step (s₁, s₂, ...) of the plurality of computational steps (s₁,s₂, ... , sₙ) over at least one other network node (102_{B}, 102c, ...) of the edge computing network (100), in order to distribute the computational task over different nodes (102_{A}, 102_{B}, 102c, ...) of the edge computing network (100).

2. Network node (102_{A}) according to claim 1,
wherein the input data (INP) is to be processed by the computational task by sequentially applying the plurality of computational steps (s₁, s₂, ..., sₙ) to the input data (INP) or processed versions of the input data.

3. Network node (102_{A}) according to claim 2,
wherein the network node (102_{A}) is configured to distribute the processing of the at least one computational step (s₁, s₂,...) to the at least one other network node (102_{B}, 102c, ...) by transmitting a data package (p₀, p₁, p₂, ..., pₘ) to a respective network node of the at least one other network node (102_{B}, 102c, ...), the data package (p₀, p₁, p₂, ..., pₘ) comprising the input data (INP) or a processed version of the input data to be processed by a respective computational step of the at least one computational step (s₁, s₂, ...) by the respective other network node.

4. Network node (102_{A}) according to one of the claims 1 to 3,
wherein the processing of the at least one computational step (s₁, s₂, ...) is distributed over the at least one other network node (102_{B}, 102c, ...) by means of a request-response mechanism.

5. Network node (102_{A}) according to claim 4,
wherein the network node (102_{A}) is configured to perform the request-response mechanism by, for the at least two computational steps (s₁,s₂),
- transmitting a request message to the at least one other network node (102_{B}, 102_{C}, ...), the request message requesting an availability to perform a respective step of the at least one computational step (s₁, s₂, ...),
- transmitting, in response to a reception of an accept message from one of the at least one other network node (102_{B}, 102c, ...), the accept message indicating an availability for performing the respective step of the at least one computational step (s₁, s₂, ...), a compute message to the respective other network node, the compute message triggering the respective other network node to perform the respective computational step.

6. Network node (102_{A}) according to claim 5,
wherein the compute message further comprises or is transmitted together with a respective data package (p₀, p₁, p₂, ..., pₘ) to be processed by the respective computational step.

7. Network node (102_{A}) according to one of the claims 5 or 6,
wherein the network node (102_{A}) is configured to transmit the respective compute message immediately in response to the reception of the respective acknowledge message,
or wherein the network node (102_{A}) is configured, in case of receiving two or more accept messages from two or more other network nodes (102_{B}, 102c, ...) in response to a respective request message, to select one of the two or more other network nodes (102_{B}, 102c, ...) based on a selection criterion and to transmit the respective compute message to the selected other network node.

8. Network node (102_{A}) according to one of the claims 5 to 7,
wherein the network node (102_{A}) is configured to periodically transmit request messages in case there are data packages in its outgoing queue, wherein the data packages comprise the input data (INP) or a processed version of the input data to be processed by a respective computational step of the at least one computational step (s₁, s₂,...) by the respective other network node.

9. Network node (102_{A}) according to one of the claims 5 to 8,
wherein the network node (102_{A}) is configured to retransmit a respective request message in case that no respective accept message is received,
and/or wherein the network node (102_{A}) is configured to retransmit a respective request message in case that no acknowledgement message is received, the acknowledgment message indicating that the respective compute message and/or the respective data package was successfully received.

10. Network node (102_{A}) according to one of the claims 1 to 9,
wherein the network node (102_{A}) is configured, upon connecting to the edge computing network (100), to immedialty respond to a request message requesting an availability to perform a respective step of the at least one computational step (s₁, s₂, ...) in case that the network node is capable of performing the respective step,
and/or wherein the network node (102_{A}) is configured, upon connecting to the edge computing network, to load instructions for performing at least one of the plurality of computational steps (s₁,s₂,... , sₙ),
and/or wherein the network node (102_{A}) is configured, upon detecting that no other network node (102_{B}, 102_{C}, ...) of the edge computing network is currently capable of performing one of the plurality of computational steps (s₁, s₂, ..., sₙ), to load instructions for performing the one computational step.

11. Network node (102_{A}) according to one of the claims 1 to 10,
wherein the network node (102_{A}) is a battery operated device, such as user equipment, loT device, autonomous robot or drone or unmanned vehicle.
and/or wherein the network node (102_{A}) is connected to the at least two other network nodes of the edge computing network via a network backend.

12. Network node (102_{A}) according to one of the claims 1 to 11,
wherein at least one of the plurality of steps (s₁, s₂, ..., sₙ) comprises a plurality of sub-steps (s_{3,1}, s_{3,2}, s_{3,3}),
wherein the plurality of sub-steps (s_{3,1}, s_{3,2}, s_{3,3}) are performed in parallel by the network node (102_{A}) and/or at least one other network node (102_{B}, 102_{C}, ...).

13. Network node (102_{A}) according to one of the claims 1 to 12,
wherein the input data (INP) is to be processed by a at least two computational tasks, each of the at least two computational tasks comprising a plurality of computational steps.

14. Edge computing network, comprising:
a plurality of network nodes (102_{A}, 102_{B}, 102c, ...) according to one of the claims 1 to 13,

15. Edge computing network according to claim 14,
wherein the edge computing network comprises no central, managing/orchestrating server or group head.

16. Edge computing network according to claim 14 or 15,
wherein edge computing network is a neural network.

17. Method for distributing a computational task over different network nodes (102_{B}, 102c, ...) of an edge computing network (100), the method comprising:
obtaining input data (INP) to be processed by the computational task, wherein the computational task comprises a plurality of computational steps (s₁, s₂, ..., sₙ),
distributing a processing of at least one computational step (s₁, s₂, ...) of the plurality of computational steps (s₁, s₂, ..., sₙ) over at least one other network node (102_{B}, 102_{C}, ...) of the edge computing network (100), in order to distribute the computational task over different nodes (102_{A}, 102_{B}, 102c, ...) of the edge computing network (100).

18. Computer program for performing, when running on a computer or microprocessor, a method according to claim 17.
